# EUROPEAN PATENT APPLICATION

(11) **EP 4 443 553 A1**
(43) Date of publication of application: **09.10.2024**
(21) Application number: 22949747.4
(22) Date of filing: 05.07.2022
(51) Int. Cl.: H01M 4/36, H01M 50/449

(54) **ELECTRODE ASSEMBLY, SECONDARY BATTERY, BATTERY MODULE, BATTERY PACK AND ELECTRIC DEVICE**

(71) Applicant: Contemporary Amperex Technology (Hong Kong) Limited, Central, Central And Western District (HK)
(72) Inventor: YOU, Xingyan, Ningde, Fujian 352100 (CN); WU, Yiyang, Ningde, Fujian 352100 (CN); BAI, Wenlong, Ningde, Fujian 352100 (CN); WU, Baozhen, Ningde, Fujian 352100 (CN)
(74) Representative: Kraus & Lederer PartGmbB
(86) International application number: PCT/CN2022/103947
(87) International publication number: WO 2024/007159

(57) **Abstract**

The present application provides an electrode assembly, a secondary battery, a battery module, a battery pack, and an electrical device. The electrode assembly includes a negative electrode plate, a positive electrode plate, and a separator located between the negative electrode plate and the positive electrode plate, where the negative electrode plate includes a negative electrode current collector, and a first negative electrode film layer and a second negative electrode film layer disposed on at least one surface of the negative electrode current collector; the first negative electrode film layer is located between the negative electrode current collector and the second negative electrode film layer and includes a first negative electrode active material, the first negative electrode active material includes graphite, the second negative electrode film layer includes a second negative electrode active material, and the second negative electrode active material includes hard carbon; and the separator includes a base film and a functional coating located at least on a side, against the negative electrode plate, of the base film, and the functional coating includes a ferroelectric material. The electrode assembly provided by the present application can enable the secondary battery to have high charging rate and long cycle life on the premise of high energy density.

## Description

### TECHNICAL FIELD

The present application belongs to the field of battery technologies, and specifically relates to an electrode assembly, a secondary battery, a battery module, a battery pack, and an electrical device.

### BACKGROUND

In recent years, secondary batteries have been widely used in energy storage power systems such as hydropower, firepower, wind power, and solar power plants, as well as in various fields such as electric tools, electric bicycles, electric motorcycles, electric vehicles, military equipment, and aerospace. With the application and promotion of secondary batteries, people have increasingly high requirements for energy density, cycle performance, and high-rate charging performance of secondary batteries. As an important component of secondary batteries, the performance of negative electrode active materials affects the performance of secondary batteries to some extent. Graphite is one of the most commonly used negative electrode active materials in secondary batteries, with the advantages of low polarization and high cycle stability. However, its theoretical gram capacity is only 372 mAh/g. At present, the performance of commercial graphite has almost been developed to the extreme, and improvement on its reversible gram capacity and energy density is very limited. Meanwhile, graphite has a small interlayer spacing, and its high-rate charging performance has almost been developed to the extreme. As a novel negative electrode active material, hard carbon can quickly intercalate and deintercalate active ions in charging and discharging processes of secondary batteries, so its application prospect is very broad. However, commercial hard carbon has relatively low compaction density and initial coulombic efficiency, and therefor has limited effectiveness in improving energy density of secondary batteries.

### SUMMARY

The present application aims to provide an electrode assembly, a secondary battery, a battery module, a battery pack, and an electrical device, so that the secondary battery has high charging rate and long cycle life on the premise of high energy density.

A first aspect of the present application provides an electrode assembly, comprising a negative electrode plate, a positive electrode plate, and a separator located between the negative electrode plate and the positive electrode plate, where the negative electrode plate comprises a negative electrode current collector, and a first negative electrode film layer and a second negative electrode film layer disposed on at least one surface of the negative electrode current collector; the first negative electrode film layer is located between the negative electrode current collector and the second negative electrode film layer and comprises a first negative electrode active material, the first negative electrode active material comprises graphite, the second negative electrode film layer comprises a second negative electrode active material, and the second negative electrode active material comprises hard carbon; and the separator comprises a base film and a functional coating located at least on a side, against the negative electrode plate, of the base film, and the functional coating comprises a ferroelectric material.

In the electrode assembly of the present application, the first negative electrode film layer comprising graphite and the second negative electrode film layer comprising hard carbon are sequentially disposed on the surface of the negative electrode current collector to form a two-layer combination, which can compensate for respective defects of graphite and hard carbon and highlight their advantages. The interlayer spacing of the hard carbon is relatively large, which can provide a larger charging rate. The graphite is disposed between the hard carbon and the negative electrode collector, which can compensate for initial coulombic efficiency of the hard carbon. In addition, the potential for intercalating active ions into the microporous structure of hard carbon is about 0 V, which is close to the potential for precipitating active ions on the surface of graphite, so the microporous structure of the hard carbon cannot be fully exerted as storage sites for active ions. The inventors of the present application were surprised to find that the foregoing problems can be solved by disposing a functional coating comprising a ferroelectric material at least on a side, near the second negative electrode film layer, of the separator. The ferroelectric material can regulate deposition of active ions to highlight the large capacity advantage of the microporous structure of the hard carbon, and can also inhibit continuous reduction and precipitation of active ions on the surface of graphite to prolong the cycle life of the secondary battery. Therefore, the secondary battery using the electrode assembly of the present application has long cycle life and can be charged at a high rate. Meanwhile, the secondary battery can further have high output voltage and high energy density.

In some embodiments of the present application, the functional coating has a thickness of H₁ µm, the second negative electrode film layer has a thickness of H₂ µm, the first negative electrode film layer has a thickness of H₃ µm, and the electrode assembly satisfies that H₁/(H₂+H₃) is 0.01 to 0.15, and optionally 0.01 to 0.08. In this case, the comprehensive performance of the secondary battery is better, and high-rate charging can be implemented at a high energy density.

In some embodiments of the present application, the thickness of the functional coating is H₁ µm, and H₁ is 2 to 10, and optionally 4 to 6. In this case, the comprehensive performance of the secondary battery is better, and high-rate charging can be implemented at a high energy density.

In some embodiments of the present application, the thickness of the second negative electrode film layer is H₂ µm, the thickness of the first negative electrode film layer is H₃ µm, and the negative electrode plate satisfies that H₂/H₃ is 0.10 to 5, and optionally 0.5 to 4. In this case, the second negative electrode film layer and the first negative electrode film layer can achieve better synergistic effects.

In some embodiments of the present application, the ferroelectric material has a volume average particle size Dv50 of d₁ µm, and d₁ is 1 or less, and optionally 0.05 to 0.8. In this case, the comprehensive performance of the secondary battery is better, high-rate charging can be implemented at a high energy density, and production costs can be reduced.

In some embodiments of the present application, the second negative electrode active material has a volume average particle size Dv50 of d₂ µm, the first negative electrode active material has a volume average particle size Dv50 of d₃ µm, and d₂/d₃ is 0.1 to 1, and optionally 0.2 to 0.8. In this case, the second negative electrode film layer can improve the high-rate charging capability of the secondary battery, and the first negative electrode film layer can improve the initial coulombic efficiency and cycle life of the secondary battery, so that the secondary battery has better comprehensive performance and can be charged at a high rate under a high energy density.

In some embodiments of the present application, the ferroelectric material in the functional coating has a mass percentage of W1, and based on a total mass of the functional coating, W1 is 70% to 95%, and optionally 80% to 95%. In this case, the comprehensive performance of the secondary battery is better, and high-rate charging can be implemented at a high energy density.

In some embodiments of the present application, the functional coating further comprises a binder, and optionally, the binder comprises one or more selected from styrene butadiene rubber, polyacrylic acid, sodium polyacrylate, polyacrylamide, polyvinyl alcohol, sodium alginate, polymethacrylic acid, carboxymethyl chitosan, fluoroacrylate resin, polytetrafluoroethylene, a vinylidene fluoride homopolymer, and a copolymer thereof.

In some embodiments of the present application, the separator further comprises a bonding layer disposed on a surface of the functional coating, and optionally, the bonding layer comprises one or more selected from homopolymers and copolymers of vinylidene fluoride. This can improve the winding effect of the electrode assembly, so that the secondary battery has a longer cycle life.

In some embodiments of the present application, the ferroelectric material has a dielectric constant of 50 or more, and optionally 50 to 100000.

In some embodiments of the present application, the ferroelectric material comprises one or more selected from inorganic and organic ferroelectric materials; optionally, the inorganic ferroelectric material comprises one or more selected from a perovskite structured oxide, a tungsten bronze type compound, a bismuth oxide type stratified structured compound, lithium niobate, lithium tantalate, lead metaniobate, and lead barium lithium niobate; and the organic ferroelectric material comprises one or more selected from a homopolymer or copolymer of vinylidene fluoride, 2,5-dibromo-3,6-dihydroxy-p-benzoquinone, phenazine-chloranilic acid, and croconic acid.

In some embodiments of the present application, the hard carbon in the second negative electrode film layer has a mass percentage of W2, and based on a total mass of the second negative electrode film layer, W2 is 68% or more, and optionally 90% to 98%. This is beneficial for the secondary battery to have a higher charging rate.

In some embodiments of the present application, the graphite in the first negative electrode film layer has a mass percentage of W3, and based on a total mass of the first negative electrode film layer, W3 is 78% or more, and optionally 90% to 98%. This is beneficial for the secondary battery to have higher initial coulombic efficiency and longer cycle life.

In some embodiments of the present application, the second negative electrode active material has a volume average particle size Dv50 of d₂ µm, and d₂ is 3 to 11, and optionally 3 to 7. This is beneficial to improving the capacity and energy density of the secondary battery.

In some embodiments of the present application, the second negative electrode active material has a particle size distribution index (Dv90 - Dv10)/Dv50 of α₁, and α₁ is 0.6 to 5, and optionally 1 to 4. This is beneficial to improving the high-rate charging capability and charging and discharging efficiency of the secondary battery.

In some embodiments of the present application, the second negative electrode active material has a specific surface area of 3 m²/g to 7 m²/g, and optionally 4 m²/g to 6 m²/g. This is beneficial to improving the high-rate charging capability of the secondary battery.

In some embodiments of the present application, the second negative electrode active material has a powder compaction density of 0.9 g/cm³ to 1.3 g/cm³ at 20000 N, and optionally 1 g/cm³ to 1.2 g/cm³. This is beneficial to increasing the energy density of the secondary battery.

In some embodiments of the present application, the second negative electrode active material comprises primary particles, secondary particles, or a combination thereof, and optionally, a quantity proportion of the primary particles in the second negative electrode active material is 90% to 100%. This is beneficial to improving the high-rate charging capability of the secondary battery.

In some embodiments of the present application, the first negative electrode active material has a volume average particle size Dv50 of d₃ µm, and d₃ is 9 to 18, and optionally 11 to 15. This is beneficial for the secondary battery to have high initial coulombic efficiency, high energy density, and long cycle life.

In some embodiments of the present application, the first negative electrode active material has a particle size distribution index (Dv90 - Dv10)/Dv50 of α₂, and α₂ is 0.2 to 5, and optionally 0.3 to 4. This is beneficial to improving the cycle performance of the secondary battery.

In some embodiments of the present application, the first negative electrode active material has a specific surface area of 0.6 m²/g to 1.5 m²/g, and optionally 0.8 m²/g to 1.4 m²/g. This is beneficial to improving the cycle performance of the secondary battery.

In some embodiments of the present application, the first negative electrode active material has a powder compaction density of 1.4 g/cm³ to 1.85 g/cm³ at 20000 N, and optionally 1.6 g/cm³ to 1.75 g/cm³. This is beneficial to increasing the energy density of the secondary battery.

In some embodiments of the present application, the first negative electrode active material has a degree of graphitization of 91% to 95%, and optionally 92% to 94%. This is beneficial to improving the cycle performance of the secondary battery.

In some embodiments of the present application, the first negative electrode active material comprises artificial graphite, natural graphite, or a combination thereof, and optionally, a surface of the artificial graphite has a carbon cladding layer. This is beneficial to improving the cycle performance and high-rate charging capability of the secondary battery.

In some embodiments of the present application, the first negative electrode active material comprises primary particles, secondary particles, or a combination thereof, and optionally, a quantity proportion of the secondary particles in the first negative electrode active material is 90% to 100%. This is beneficial to improving the cycle performance, storage performance, and high-rate charging capability of the secondary battery.

A second aspect of the present application provides a secondary battery, which comprises the electrode assembly provided in the first aspect of the present application.

A third aspect of the present application provides a battery module, which comprises the secondary battery provided in the second aspect of the present application.

A fourth aspect of the present application provides a battery pack, which comprises one of the secondary battery provided in the second aspect of the present application and the battery module provided in the third aspect.

A fifth aspect of the present application provides an electrical device, which comprises at least one of the secondary battery provided in the second aspect of the present application, the battery module provided in the third aspect, and the battery pack provided in the fourth aspect.

The secondary battery using the electrode assembly of the present application has long cycle life and can be charged at a high rate. Meanwhile, the secondary battery can further have high output voltage and high energy density. The battery module, the battery pack, and the electrical device of the present application comprise the secondary battery provided by the present application, and therefore, have at least the same advantages as the secondary battery.

### DESCRIPTION OF THE DRAWINGS

In order to explain the technical solutions of the embodiments of the present application more clearly, the accompanying drawings that need to be used in the embodiments of the present application will be briefly introduced. Obviously, the drawings described below are only some embodiments of the present application. A person of ordinary skill in the art can obtain other drawings based on the drawings without any creative effort.
Fig. 1 is a schematic diagram of an embodiment of an electrode assembly of the present application.
Fig. 2 is a schematic diagram of another embodiment of the electrode assembly of the present application.
Fig. 3 is a schematic diagram of an embodiment of a secondary battery of the present application.
Fig. 4 is an exploded schematic diagram of an embodiment of the secondary battery in Fig. 3.
Fig. 5 is a schematic diagram of an embodiment of a battery module of the present application.
Fig. 6 is a schematic diagram of an embodiment of a battery pack of the present application.
Fig. 7 is an exploded schematic diagram of an embodiment of the battery pack shown in Fig. 6.
Fig. 8 is a schematic diagram of an embodiment of an electrical device including the secondary battery of the present application as a power supply.

The drawings are not drawn to actual scale. Reference numerals are as follows: 1 battery pack, 2 upper box body, 3 lower box body, 4 battery module, 5 secondary battery, 51 shell, 52 electrode assembly, 53 cover plate, 6 electrode assembly, 10 negative electrode plate, 100 negative electrode current collector, 101 first negative electrode film layer, 102 second negative electrode film layer, 20 positive electrode plate, 200 positive electrode current collector, 201 positive electrode film layer, 30 separator, 300 base film, 301 functional coating, 302 bonding layer.

### DETAILED DESCRIPTION

Hereinafter, embodiments of an electrode assembly, a secondary battery, a battery module, a battery pack, and an electrical device of the present application are explained in detail with appropriate reference to the accompanying drawings. However, unnecessary detailed explanations are omitted. For example, detailed explanations of well-known matters and repeated explanations of actually identical structures are omitted. This prevents the following explanations from unnecessarily becoming lengthy and facilitates understanding of those skilled in the art. In addition, the accompanying drawings and the following explanations are provided for those skilled in the art to fully understand the present application and are not intended to limit the subject matter of the claims.

The "range" disclosed in the present application is defined in a form of a lower limit and an upper limit. A given range is defined by selecting a lower limit and an upper limit, and the selected lower limit and upper limit define boundaries of a particular range. The range defined in this way can include or exclude end values, and can be combined arbitrarily, that is, any lower limit can be combined with any upper limit to form a range. For example, if a range of 60-120 and 80-110 is listed for a specific parameter, it is understood that a range of 60-110 and 80-120 is also expected. In addition, if minimum range values 1 and 2 are listed, and if maximum range values 3, 4, and 5 are listed, the following ranges can all be expected: 1-3, 1-4, 1-5, 2-3, 2-4, and 2-5. In the present application, unless otherwise specified, a numerical range "a-b" represents an abbreviation of any combination of real numbers between a and b, where both a and b are real numbers. For example, a numerical range "0-5" represents all real numbers "0-5" listed herein, and "0-5" is only an abbreviation of a combination of these values. In addition, when a parameter is expressed as an integer ≥ 2, it is equivalent to disclosing that the parameter is, for example, an integer 2, 3, 4, 5, 6, 7, 8, 9, 10, 11, or 12.

Unless otherwise specified, all the embodiments and optional embodiments of the present application can be combined with each other to form new technical solutions, and such technical solutions should be considered being included in the disclosure of the present application.

Unless otherwise specified, all the technical features and optional technical features of the present application can be combined with each other to form new technical solutions, and such technical solutions should be considered being included in the disclosure of the present application.

Unless otherwise specified, all the steps of the present application may be performed sequentially or randomly, but preferably sequentially. For example, the method includes steps (a) and (b), indicating that the method may include steps (a) and (b) performed sequentially, or may include steps (b) and (a) performed sequentially. For example, the method may further include step (c), indicating that step (c) may be added to the method in any order. For example, the method may include steps (a), (b) and (c), or steps (a), (c) and (b), or steps (c), (a) and (b).

Unless otherwise specified, the expressions "comprise" and "include" mentioned in the present application are open-ended or closed-ended. For example, the expressions "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

In the present application, the terms "a plurality of" and "more" (when used in "one or more" or the like) refer to two or more.

In the present application, the terms "primary particle" and "secondary particle" have well-known meanings in the art. The primary particle refers to a particle that is not agglomerated, and the secondary particle refers to a particle that is aggregated by two or more primary particles. The primary and secondary particles can be easily distinguished by capturing images with a scanning electron microscope (SEM).

Hard carbon refers to carbon that is difficult to graphitize, even at high temperatures above 2500°C. The hard carbon is usually obtained by pyrolysis of a precursor such as a polymer. In a pyrolysis process, cross-linked structures of carbon atoms in the precursor hinder planar growth of carbon layers. Therefore, the hard carbon structure contains a large number of disordered graphite-like microcrystals (referred to as graphite microcrystals). The hard carbon structure is complex, and further contains defect structures (such as surface defects and lattice defects) and microporous structures (such as open pore structures and closed pore structures) in addition to the graphite microcrystals. Therefore, active ions can be intercalated and deintercalated from various angles of hard carbon, so that secondary batteries have excellent high-rate charging capability. In particular, hard carbon has unique advantages in the field of power batteries. Compared with graphite, hard carbon (002) has a larger interlayer spacing between crystal planes, resulting in higher stability of the hard carbon structure during charging and discharging, without significant volume expansion and contraction effects.

The hard carbon structure has many defects, which catalyze decomposition of an electrolytic solution to form a thick solid electrolyte interface (SEI) film, so as to increase irreversible loss of active ions. Moreover, the surface of hard carbon has a loose porous structure, which easily adsorbs water, oxygen, and the like in air to form various C-H functional groups on the surface. These functional groups react with active ions to further increase irreversible consumption of the active ions. Therefore, compared to graphite, hard carbon has lower initial coulombic efficiency and poorer cycle performance. For example, the initial coulombic efficiency is usually less than 80%, so that hard carbon cannot fully exert its high capacity advantage.

The inventors of the present application conducted a lot of research and provided an electrode assembly that can increase the capacity of hard carbon, so that secondary batteries can have improved high-rate charging capability and cycle life on the premise of high energy density.

### Electrode assembly

Specifically, an electrode assembly of the present application includes a negative electrode plate, a positive electrode plate, and a separator located between the negative electrode plate and the positive electrode plate, where the negative electrode plate includes a negative electrode current collector, and a first negative electrode film layer and a second negative electrode film layer disposed on at least one surface of the negative electrode current collector; the first negative electrode film layer is located between the negative electrode current collector and the second negative electrode film layer and includes a first negative electrode active material, the first negative electrode active material includes graphite, the second negative electrode film layer includes a second negative electrode active material, and the second negative electrode active material includes hard carbon; and the separator includes a base film and a functional coating located at least on a side, against the negative electrode plate, of the base film, and the functional coating includes a ferroelectric material. In some embodiments, the positive electrode plate, the separator, and the negative electrode plate may be made into an electrode assembly by a winding process and/or a laminating process.

Graphite has advantages of high initial coulombic efficiency and high cycle stability, but has poor high-rate continuous charging performance. Hard carbon has advantages of high intercalation and deintercalation rates of active ions, and therefore, has excellent high-rate charging capability, but its initial coulombic efficiency is low and its capacity decay is fast, resulting in poor actual capacity of secondary batteries. The inventors of the present application found in an actual research process that two-layer combination of graphite and hard carbon sequentially disposed on the surface of a negative electrode current collector can compensate for respective defects of the graphite and the hard carbon. The graphite is disposed close to the negative electrode current collector to compensate for the initial coulombic efficiency of hard carbon. The hard carbon is disposed away from the negative electrode current collector to intercalate more active ions into a negative electrode faster, thereby avoiding poor continuous high-rate charging performance of graphite.

However, the inventors of the present application also found in further research that the improvement on the high-rate charging capability and energy density of a secondary battery is not ideal when graphite and hard carbon are sequentially disposed on the surface of the negative electrode current collector to form a two-layer combination. After in-depth research, the inventors found that the possible reason is that the formation of "dendrites" during charging of the secondary battery, especially in the late stage of charging, is an important factor affecting the improvement on the high-rate charging capability and energy density of the secondary battery.

During charging of the secondary battery, in case of abnormalities that an intercalation space for negative electrode active ions is insufficient, resistance to intercalation of the active ions into the negative electrode is excessive, the active ions are deintercalated from the positive electrode too fast but cannot be equally intercalated into the negative electrode, and the like, active ions that cannot be intercalated into the negative electrode can only obtain electrons on the surface of the negative electrode and precipitate in a form of metal elements to form "dendrites". As a result, the higher the charging rate of the secondary battery, the more serious the "dendrite" problem. The formation of dendrites leads to a decrease in the performance of the secondary battery, such as shortened cycle life, and sharp dendrites are formed in severe cases to puncture the separator and cause a short circuit within the battery, thereby potentially leading to catastrophic consequences such as combustion and explosion to increase safety risks of the secondary battery. Moreover, the continuously deposited dendrites further detach from the surface of the negative electrode to lose electrical contact with the negative electrode collector, and then cannot continue to participate in charge and discharge reactions and contribute capacity, thereby decreasing the energy density of the secondary battery.

After graphite and hard carbon are sequentially disposed on the surface of the negative electrode current collector to form a two-layer combination, active ions are first adsorbed on surface defects and lattice defects of the hard carbon in the early stage of charging of the secondary battery. This process corresponds to a "high potential slope zone" in a hard carbon charging and discharging curve, where the potential of the negative electrode is usually between -2 V and -0.1 V As the charging continues, active ions are intercalated into graphite microcrystal layers of the hard carbon, similar to intercalation of graphite. This process corresponds to a "low potential plateau zone" in the hard carbon charging and discharging curve, where the potential of the negative electrode is usually between -0.1 V and 0 V Due to the rich microporous structure of hard carbon, when the potential of the negative electrode decreases to about 0 V during secondary charging, active ions can further be stored in the microporous structure of the hard carbon to provide additional storage sites for active ions, thereby improving the capacity and initial coulombic efficiency of the hard carbon. In addition, the longer the discharge plateau in the low potential plateau zone, the higher the corresponding reversible capacity of the hard carbon, and the better the capacity. However, the potential of the low potential plateau zone of hard carbon is close to the potential for forming dendrites on the surface of graphite, both of which are about 0 V Therefore, in order to prevent the formation of dendrites, the capacity of the low potential plateau zone of hard carbon is limited, and the microporous structure of hard carbon cannot be fully exerted as storage sites for active ions. Meanwhile, in order to prevent the formation of dendrites, negative electrode cutoff voltage is usually high, which leads to a decrease in the overall output voltage of the secondary battery and further leads to a decrease in the energy density of the secondary battery. Therefore, the two-layer combination of graphite and hard carbon sequentially disposed on the surface of the negative electrode current collector has limited effects of improving the high-rate charging capability, energy density, and/or cycle life of the secondary battery.

In the electrode assembly of the present application, the first negative electrode film layer including graphite and the second negative electrode film layer including hard carbon are sequentially disposed on the surface of the negative electrode current collector to form a two-layer combination design, and the functional coating including a ferroelectric material is further disposed on the side, near the second negative electrode film layer, of the separator. The ferroelectric material exhibits a spontaneous polarization phenomenon. When electrons aggregate on the surface of dendrites, the ferroelectric material undergoes spontaneous polarization under the influence of an electric field, so that positive charge centers of the ferroelectric material move towards an electron aggregation zone to wrap the electron aggregation zone. Meanwhile, because the positive charge centers of the ferroelectric material are positively charged and repel the positively charged active ions on the surface of dendrites, effects of balancing electron density and reducing enrichment of active ions can be achieved to inhibit continuous growth of dendrites in a direction perpendicular to the electrode plates.

Therefore, in the electrode assembly of the present application, the first negative electrode film layer including graphite and the second negative electrode film layer including hard carbon are sequentially disposed on the surface of the negative electrode current collector to form a two-layer combination, which can compensate for respective defects of graphite and hard carbon and highlight their advantages. The interlayer spacing of the hard carbon is relatively large, which can provide a larger charging rate. The graphite is disposed between the hard carbon and the negative electrode collector, which can compensate for initial coulombic efficiency of the hard carbon. In addition, since the potential for intercalating active ions into the microporous structure of hard carbon is about 0 V, which is close to the potential for precipitating active ions on the surface of graphite, so the microporous structure of hard carbon cannot be fully exerted as storage sites for active ions. The inventors of the present application surprisingly found that the foregoing problem can be solved by disposing a functional coating including a ferroelectric material at least on a side, near the second negative electrode film layer, of the separator. The ferroelectric material can regulate deposition of active ions to highlight the large capacity advantage of the microporous structure of hard carbon, and can also inhibit continuous reduction and precipitation of active ions on the surface of graphite to prolong the cycle life of the secondary battery.

Specifically, in the early stage of charging of the secondary battery, active ions quickly adsorb on the surface defects and lattice defects of hard carbon, so that the negative electrode plate has high dynamics performance; and in the later stage of charging of the secondary battery, over-potential can be accurately regulated under the action of the functional coating, so that the microporous structure of hard carbon stores a large number of active ions, the length of the low potential plateau zone is increased, the reversible capacity of the secondary battery is increased, and the high-rate charging capability and energy density of the secondary battery are improved accordingly. Moreover, under the over-potential, the functional coating can generate a reverse electric field, thereby reducing the enrichment of active ions, inhibiting the continuous growth of dendrites in the direction perpendicular to the electrode plates, and improving the safety and cycle performance of the secondary battery.

Furthermore, in the electrode assembly of the present application, the functional coating is disposed on the surface of the separator without adding production procedures, damaging the negative electrode plate, or affecting the machining performance of the negative electrode plate, so that the secondary battery has better comprehensive performance. As the functional coating is disposed on the surface of the separator, it can also increase heat resistance of the separator and decrease thermal shrinkage of the separator, thereby helping to improve the safety performance, especially thermal safety performance, of the secondary battery.

Therefore, the secondary battery using the electrode assembly of the present application has long cycle life and can be charged at a high rate. Meanwhile, the secondary battery can further have high output voltage and high energy density.

### [Separator]

The separator of the present application includes a base film and a functional coating located at least on a side, against the negative electrode plate, of the base film. The base film has two surfaces opposite in its thickness direction. The functional coating may be disposed on two surfaces of the base film, or only on a surface of the side, against the negative electrode plate, of the base film. Optionally, the functional coating may be disposed on the two surfaces of the base film.

The present application does not limit a type of the base film. Any well-known porous structural film with good chemical and mechanical stability may be used. In some embodiments, a material of the base film may include one or more selected from glass fiber, non-woven fabric, polyethylene, polypropylene, and polyvinylidene fluoride. The base film may be a single-layer film or a multi-layer composite film. When the base film is the multi-layer composite film, the material of each layer is the same or different.

In some embodiments, the base film has a thickness of 7 µm to 12 µm, but the present application is not limited thereto.

The functional coating includes a ferroelectric material. In some embodiments, optionally, the ferroelectric material has a dielectric constant of 50 or more. The higher the dielectric constant of the ferroelectric material, the better the effect of inhibiting the continuous growth of dendrites in the direction perpendicular to the electrode plates, but the effect will not continue to increase. Meanwhile, the higher the dielectric constant, the higher the requirements for the preparation process of the ferroelectric material, which increases production costs. In some embodiments, optionally, the dielectric constant of the ferroelectric material may be 50 to 100000, such as 50 to 50000, 50 to 25000, 50 to 10000, 50 to 5000, 50 to 4000, 50 to 3000, 50 to 2000, 100 to 100000, 100 to 50000, 100 to 25000, 100 to 10000, 100 to 5000, 100 to 4000, 100 to 3000, 100 to 2000, 200 to 100000, 200 to 50000, 200 to 25000, 200 to 10000, 200 to 5000, 200 to 4000, 200 to 3000, 200 to 2000, or 200 to 1000.

In the present application, the dielectric constant of the ferroelectric material refers to a dielectric constant at room temperature (25°C ± 5°C), has a well-known meaning in the art, and can be tested by instruments and methods known in the art. For example, the ferroelectric material may be prepared into a circular sample, capacitance C of which can be measured with an LCR tester, and the dielectric constant can be obtained according to a formula: dielectric constant ε = (C × d)/(ε₀ × A), wherein C represents the capacitance, in farads (F); d represents a thickness of the sample, in cm; A represents an area of the sample, in cm²; and ε₀ represents a vacuum dielectric constant, ε₀ = 8.854 × 10⁻¹⁴F/cm. In the present application, test conditions may be 1 KHz, 1.0 V, and 25°C ± 5°C. The test may be performed according to the standard GB/T 11297.11-2015. When the sample is prepared, reference may be made to Chinese patent application CN114217139A.

In some embodiments, the ferroelectric material may include one or more selected from inorganic and organic ferroelectric materials. Optionally, the ferroelectric material may include one or more selected from inorganic ferroelectric materials.

In some embodiments, optionally, the inorganic ferroelectric material may include one or more selected from a perovskite structured oxide, a tungsten bronze type compound, a bismuth oxide type stratified structured compound, lithium niobate (LiNbO₃), lithium tantalate (LiTaO₃), lead metaniobate, and lead barium lithium niobate. More optionally, the inorganic ferroelectric material is selected from a perovskite structured oxide.

Optionally, the perovskite structured oxide has a molecular formula Ba₁₋ₓAₓTi_{1-y}B_{y}O₃. A may include one or more selected from Pb, Sr, Ca, K, Na, and Cd; B may include one or more selected from Sn, Hf, Zr, Ce, Nb, and Th; 0 ≤ x ≤ 1, and 0 ≤ y ≤ 1. For example, the perovskite structured oxide may include one or more selected from BaTiOs, Ba₁₋ₓ₁Srₓ₁TiO₃ (0 ≤ x1 ≤ 1), SrTiO₃, PbTiO₃, PbZr_{y1}Ti_{1-y1}O₃ (0 ≤ y1 ≤ 1), BaZr_{y2}Ti_{1-y2}O₃(0 < y2 < 1), KNbO₃, and NaNbO₃.

Optionally, the tungsten bronze type compound may have a molecular formula M_{z}WO₃. M may include one or more selected from Na, K, Rb, and Cs, and 0 < z < 1. For example, the tungsten bronze type compound may include one or more selected from Na_{z1}WO₃ (0 < z1 < 1) and K_{z2}WO₃ (0 < z2 < 1).

Optionally, the bismuth oxide type stratified structured compound has a molecular formula (Bi₂O₂)(Cₙ₋₁DₙO₃ₙ₊₁). C may include one or more selected from Na, K, Ba, Sr, Pb, Ca, Ln, and Bi; D may include one or more selected from Zr, Cr, Nb, Ta, Mo, W, Fe, Ti, and V; and 2 ≤ n ≤ 5. For example, the bismuth oxide type stratified structured compound may be one of or a combination of SrBi₂Nb₂O₉, SrBi₂Ta₂O₉, SrBi₂Nb₂O₉, and Bi₄Ti₃O₁₂.

In some embodiments, the organic ferroelectric material may include one or more selected from a homopolymer or copolymer of vinylidene fluoride, 2,5-dibromo-3,6-dihydroxy-p-benzoquinone, phenazine-chloranilic acid, and croconic acid.

In some embodiments, the ferroelectric material has a volume average particle size Dv50 of d₁ µm, and d1 is 1 or less, such as 0.8, 0.7, 0.6, 0.5, 0.4, 0.3, 0.2, or less. Optionally, d₁ is 0.01 to 1, 0.02 to 1, 0.03 to 1, 0.04 to 1, 0.05 to 1, 0.06 to 1, 0.07 to 1, 0.08 to 1, 0.01 to 0.8, 0.02 to 0.8, 0.03 to 0.8, 0.04 to 0.8, 0.05 to 0.8, 0.06 to 0.8, 0.07 to 0.8, 0.08 to 0.8, 0.09 to 0.8, or 0.1 to 0.8.

When the Dv50 of the ferroelectric material is within an appropriate range, the comprehensive performance of the secondary battery is better, high-rate charging can be implemented at a high energy density, and production costs can be reduced. In addition, the following situations can be effectively avoided: when the Dv50 of the ferroelectric material is large, the interference of the reverse electric field generated by the ferroelectric material may be large, and the effects of balancing the electron density and inhibiting the continuous growth of dendrites in the direction perpendicular to the electrode plates may not be achieved, so the safety risk of the secondary battery increases when the output voltage of the secondary battery is increased to increase the energy density, and the microporous structure of hard carbon cannot be fully exerted as storage sites for active ions when the output voltage of the secondary battery is decreased to decrease the safety risk of the secondary battery; and when the Dv50 of the ferroelectric material is small, its preparation process is complex, which increases production costs.

In some embodiments, the functional coating has a thickness of H₁ µm, the second negative electrode film layer has a thickness of H₂ µm, the first negative electrode film layer has a thickness of H₃ µm, and the electrode assembly satisfies that H₁/(H₂+H₃) is 0.01 to 0.15, and optionally 0.01 to 0.08.

In further research, the inventors found that the secondary battery has better comprehensive performance and can be charged at a high rate under high energy density when the functional coating has a thickness of H₁ µm, the second negative electrode film layer has a thickness of H₂ µm, the first negative electrode film layer has a thickness of H₃ µm, and H₁/(H₂+H₃) is 0.01 to 0.15. In addition, the following situations can be effectively avoided: when the thickness of the functional coating is lower and the total thickness of the first negative electrode film layer and the second negative electrode film layer is higher, the intensity of the reverse electric field generated by the functional coating is insufficient, and the effects of balancing the electron density and inhibiting the continuous growth of dendrites in the direction perpendicular to the electrode plates may not be achieved, so the safety risk of the secondary battery increases when the output voltage of the secondary battery is increased to increase the energy density, and the microporous structure of hard carbon cannot be fully exerted as storage sites for active ions when the output voltage of the secondary battery is decreased to decrease the safety risk of the secondary battery; and when the thickness of the functional coating is higher and the total thickness of the first negative electrode film layer and the second negative electrode film layer is lower, the functional coating does not have electrochemical activity and cannot contribute to capacity, whereby a larger volume space and mass percentage will be occupied and the energy density of the secondary battery is adversely affected.

In some embodiments, the thickness of the functional coating is H₁ µm, and H₁ is 2 to 10, and optionally 4 to 6. When the thickness of the functional coating is within an appropriate range, the comprehensive performance of the secondary battery is better, and high-rate charging can be implemented at a high energy density. In addition, the following situations can be effectively avoided: when the functional coating is thinner, the intensity of the reverse electric field generated by the functional coating is insufficient, and the effects of balancing the electron density and inhibiting the continuous growth of dendrites in the direction perpendicular to the electrode plates may not be achieved, so the safety risk of the secondary battery increases when the output voltage of the secondary battery is increased to increase the energy density, and the microporous structure of hard carbon cannot be fully exerted as storage sites for active ions when the output voltage of the secondary battery is decreased to decrease the safety risk of the secondary battery; and when the functional coating is thicker, the functional coating does not have electrochemical activity and cannot contribute capacity, whereby a larger volume space and mass percentage will be occupied and the energy density of the secondary battery is adversely affected.

In some embodiments, the ferroelectric material in the functional coating has a mass percentage of W1, and based on a total mass of the functional coating, W1 is 70% to 95%, and optionally 80% to 95%.

The inventors found in further research that, when the content of the ferroelectric material is within an appropriate range, the comprehensive performance of the secondary battery is better, and high-rate charging can be implemented at a high energy density. In addition, the following situations can be effectively avoided: when the content of the ferroelectric material is lower, the intensity of the reverse electric field generated by the ferroelectric material is insufficient, and the effects of balancing the electron density and inhibiting the continuous growth of dendrites in the direction perpendicular to the electrode plates may not be achieved, so the safety risk of the secondary battery increases when the output voltage of the secondary battery is increased to increase the energy density, and the microporous structure of hard carbon cannot be fully exerted as storage sites for active ions when the output voltage of the secondary battery is decreased to decrease the safety risk of the secondary battery; and when the content of the ferroelectric material is higher, the content of other components (such as a binder) in the functional coating is lower, which may lead to poor bonding between the functional coating and the base film and easy detachment of the functional coating from the base film.

In some embodiments, the functional coating may further include a binder to bond the ferroelectric material and bond the functional coating with the second negative electrode film layer of the negative electrode plate, which can improve the winding effect of the electrode assembly, so that the secondary battery has a longer cycle life. In some embodiments, optionally, the binder may include one or more selected from styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), carboxymethyl chitosan (CMCS), fluoroacrylate resin, polytetrafluoroethylene (PTFE), a vinylidene fluoride homopolymer, and a copolymer thereof. As an example, the vinylidene fluoride copolymer may include one or more selected from vinylidene fluoride-hexafluoropropylene copolymer, vinylidene fluoride-chlorotrifluoroethylene copolymer, vinylidene fluoride-tetrafluoroethylene copolymer, vinylidene fluoride-tetrafluoroethylene-propylene terpolymer, and vinylidene fluoride-hexafluoropropylene-tetrafluoroethylene terpolymer.

In some embodiments, the functional coating may further include other additives. As an example, the other additives may include a dispersant, such as sodium carboxymethyl cellulose (CMC).

In some embodiments, the separator may further include a bonding layer disposed on a surface of the functional coating, which can further improve the winding effect of the electrode assembly, so that the secondary battery has a longer cycle life. Optionally, the bonding layer includes one or more selected from homopolymers and copolymers of vinylidene fluoride. The bonding layer not only plays a bonding role, but also has a dielectric constant, which can better inhibit the continuous growth of dendrites in the direction perpendicular to the electrode plates. As an example, the vinylidene fluoride copolymer may include one or more selected from vinylidene fluoride-hexafluoropropylene copolymer, vinylidene fluoride-chlorotrifluoroethylene copolymer, vinylidene fluoride-tetrafluoroethylene copolymer, vinylidene fluoride-tetrafluoroethylene-propylene terpolymer, and vinylidene fluoride-hexafluoropropylene-tetrafluoroethylene terpolymer. Optionally, the bonding layer has a thickness of 1 µm or less.

A preparation method for the separator provided in the present application is well-known. In some embodiments, the separator may be prepared by the following method: dispersing the ferroelectric material, the binder, and any other components in a solvent to form a slurry; and coating at least one surface of the base film with the slurry, and obtaining the separator after drying. The solvent may be N-methylpyrrolidone (NMP) or deionized water, but is not limited thereto. In some embodiments, the preparation method for the separator may further include a step of coating the surface of the functional coating with a slurry to form a bonding layer.

It should be noted that the parameters of the functional coating, provided by the present application, refer to parameter ranges of the functional coating on a single side of the base film. When the functional coating is disposed on two surfaces of the base film, if the parameters of the functional coating on either surface satisfy the requirements of the present application, it is considered to fall within the protection scope of the present application.

The thickness of the functional coating of the separator has a well-known meaning in the art, and can be measured by instruments and methods known in the art, for example, tested with a scanning electron microscope (such as ZEISS Sigma 300), which can determine a boundary zone between the functional coating and the base film more accurately. The test may be performed by referring to JY/T010-1996. To ensure the accuracy of test results, a plurality of (such as 5 or more) different areas may be randomly selected from a sample to be tested for scanning testing, and respective thicknesses of the functional coating and the base film in scale test areas are read at a magnification (such as 500 times or more). For the accuracy of testing, a plurality of test areas may be selected for testing and an average value may be selected.

### [Negative electrode plate]

In some embodiments, the second negative electrode film layer has a thickness of H₂ µm, the first negative electrode film layer has a thickness of H₃ µm, and the negative electrode plate satisfies that H₂/H₃ is 0.10 to 5, and optionally 0.5 to 4.

The inventors found in further research that, when the ratio of the thickness H₂ µm of the second negative electrode film layer to the thickness H₃ µm of the first negative electrode film layer is within an appropriate range, the second negative electrode film layer and the first negative electrode film layer can achieve better synergistic effects. The second negative electrode film layer mainly bears high-rate charging pressure to ensure that the secondary battery has a high charging rate; and the first negative electrode film layer is mainly used for providing a long cycle life and ensuring high initial coulombic efficiency, so that the secondary battery has better comprehensive performance and can be charged at a high rate under a high energy density. In addition, the following situations can be effectively avoided: when the second negative electrode film layer is thinner and the first negative electrode film layer is thicker, the hard carbon in the second negative electrode film layer shares less high-rate charging pressure in the charging process, and the graphite in the first negative electrode film layer still plays a dominant role, so the improvement on the charging rate of the secondary battery is less significant; and when the second negative electrode film layer is thicker and the first negative electrode film layer is thinner, because the surface of hard carbon contains a large quantity of inactive functional groups, irreversible consumption of active ions will be increased to affect the initial coulombic efficiency of the secondary battery, and the cycle life of the secondary battery may be shortened.

In some embodiments, the second negative electrode film layer has a thickness of H₂ µm, and H₂ is 10 to 120, optionally 35 to 110, and more optionally 40 to 100. When the thickness of the second negative electrode film layer is within an appropriate range, the secondary battery can have a high charging rate.

In some embodiments, the first negative electrode film layer has a thickness of H₃ µm, and H₃ is 20 to 100, optionally 25 to 70, and more optionally 28 to 60. When the thickness of the first negative electrode film layer is within an appropriate range, the secondary battery can have high initial coulombic efficiency and long cycle life.

The second negative electrode film layer includes a second negative electrode active material, which includes hard carbon. Optionally, a mass percentage of the hard carbon in the second negative electrode active material is 70% to 100%, and optionally 80% to 98%, based on a total mass of the second negative electrode active material. In this case, the second negative electrode film layer contains more hard carbon, which is beneficial for the secondary battery to have a higher charging rate. In some embodiments, the second negative electrode active material may include only hard carbon. In other embodiments, the second negative electrode active material may further include other negative electrode active materials in addition to hard carbon, such as graphite, soft carbon, mesophase carbon microspheres, a silicon-based material, and a tin-based material. Optionally, a mass percentage of the other negative electrode active materials in the second negative electrode active material is 30% or less, and more optionally 20% or less, based on the total mass of the second negative electrode active material.

In some embodiments, the hard carbon in the second negative electrode film layer has a mass percentage of W2, and based on a total mass of the second negative electrode film layer, W2 is 68% or more, and optionally 90% to 98%. When the content of the hard carbon is within an appropriate range, the secondary battery has a higher charging rate.

In some embodiments, the second negative electrode film layer may further include a conductive agent to collect micro-current in the second negative electrode active material (such as hard carbon), so as to reduce contact resistance of electrodes, accelerate migration of electrons, reduce polarization, and improve charging and discharging efficiency of the secondary battery. As an example, the conductive agent may include one or more selected from superconducting carbon, conductive graphite, acetylene black, carbon black, Ketjen black, carbon dots, carbon nanotubes, graphene, and carbon nanofibers. In some embodiments, based on the total mass of the second negative electrode film layer, the conductive agent has a mass percentage of 5% or less.

In some embodiments, the second negative electrode film layer may further include a binder to bond the second negative electrode active material (such as hard carbon) and bond the second negative electrode film layer with the first negative electrode film layer. As an example, the binder may include one or more selected from styrene butadiene rubber (SBR), water-soluble unsaturated resin SR-1B, waterborne acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS). In some embodiments, based on the total mass of the second negative electrode film layer, the binder has a mass percentage of 5% or less.

In some embodiments, the second negative electrode film layer may further include other additives. As an example, the other additives may include a thickener, such as sodium carboxymethyl cellulose (CMC) or a PTC thermistor material. In some embodiments, based on the total mass of the second negative electrode film layer, a mass percentage of the other additives is 2% or less.

The first negative electrode film layer includes a first negative electrode active material, which includes graphite. Optionally, a mass percentage of the graphite in the first negative electrode active material is 80% to 100%, and optionally 90% to 98%, based on a total mass of the first negative electrode active material. In this case, the first negative electrode film layer contains more graphite, which is beneficial for the secondary battery to have higher initial coulombic efficiency and longer cycle life. In some embodiments, the first negative electrode active material may include only graphite. In other embodiments, the first negative electrode active material may further include other negative electrode active materials in addition to graphite, such as hard carbon, soft carbon, mesophase carbon microspheres, a silicon-based material, and a tin-based material. Optionally, a mass percentage of the other negative electrode active materials in the first negative electrode active material is 20% or less, and more optionally 10% or less, based on the total mass of the first negative electrode active material.

In some embodiments, the graphite in the first negative electrode film layer has a mass percentage of W3, and based on a total mass of the first negative electrode film layer, W3 is 78% or more, and optionally 90% to 98%. When the content of the graphite is within an appropriate range, the secondary battery has higher initial coulombic efficiency and longer cycle life.

In some embodiments, the first negative electrode film layer may further include a conductive agent to collect micro-current in the first negative electrode active material (such as graphite), so as to reduce contact resistance of electrodes, accelerate migration of electrons, reduce polarization, and improve charging and discharging efficiency of the secondary battery. As an example, the conductive agent may include one or more selected from superconducting carbon, conductive graphite, acetylene black, carbon black, Ketjen black, carbon dots, carbon nanotubes, graphene, and carbon nanofibers. In some embodiments, based on the total mass of the first negative electrode film layer, the conductive agent has a mass percentage of 5% or less.

In some embodiments, the first negative electrode film layer may further include a binder to bond the first negative electrode active material (such as graphite), bond the first negative electrode film layer with the second negative electrode film layer, and bond the first negative electrode film layer with the negative electrode current collector. As an example, the binder may include one or more selected from styrene butadiene rubber (SBR), water-soluble unsaturated resin SR-1B, waterborne acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS). In some embodiments, based on the total mass of the first negative electrode film layer, the binder has a mass percentage of 5% or less.

In some embodiments, the first negative electrode film layer may further include other additives. As an example, the other additives may include a thickener, such as sodium carboxymethyl cellulose (CMC) or a PTC thermistor material. In some embodiments, based on the total mass of the first negative electrode film layer, a mass percentage of the other additives is 2% or less.

In some embodiments, the second negative electrode active material has a volume average particle size Dv50 of d₂ µm, the first negative electrode active material has a volume average particle size Dv50 of d₃ µm, and d₂/d₃ is 0.1 to 1, and optionally 0.2 to 0.8.

In the negative electrode plate of the present application, the first negative electrode film layer employs a first negative electrode active material with a larger particle size, and therefore, has a higher compaction density, which is beneficial for the secondary battery to have high initial coulombic efficiency, high energy density, and long cycle life. In the negative electrode plate of the present application, the second negative electrode film layer employs a second negative electrode active material with a smaller particle size, and therefore, has a larger specific surface area, which can increase a contact area with an electrolytic solution and shorten liquid phase diffusion paths and solid phase diffusion paths of active ions. Meanwhile, the integrity of the pore structure of the second negative electrode film layer is better maintained, which is beneficial for the secondary battery to have a higher charging rate. Moreover, the second negative electrode active material with smaller particle size is more resistant to pressure, so that the microporous structure of the second negative electrode active material, especially hard carbon, is better maintained, and the microporous structure of hard carbon can be fully exerted as storage sites for active ions to improve the capacity and energy density of the secondary battery. Meanwhile, the compaction density of the second negative electrode film layer is relatively low, which is conducive to rapid infiltration of the electrolytic solution into the first negative electrode film layer, thereby reducing polarization of the negative electrode and improving the charging and discharging efficiency of the secondary battery.

The inventors found in further research that, when the ratio d₂/d₃ of the particle size of the second negative electrode active material to the particle size of the first negative electrode active material is within an appropriate range, the second negative electrode film layer can improve the high-rate charging capability of the secondary battery, and the first negative electrode film layer can improve the initial coulombic efficiency and cycle life of the secondary battery, so that the secondary battery has better comprehensive performance and can be charged at a high rate under a high energy density.

In some embodiments, the volume average particle size Dv50 of the second negative electrode active material is d₂ µm, and d₂ is 3 to 11, and optionally 3 to 7. When the particle size of the second negative electrode active material is within an appropriate range, its microporous structure is better maintained, so that the microporous structure of the hard carbon can be fully used as storage sites for active ions to improve the capacity and energy density of the secondary battery. Meanwhile, when the particle size of the second negative electrode active material is within an appropriate range, the second negative electrode film layer can have a smooth pore structure, and the electrolytic solution smoothly passes through the pore structure of the second negative electrode film layer and quickly infiltrates the first negative electrode film layer, thereby reducing polarization of the negative electrode and improving the charging and discharging efficiency of the secondary battery.

In some embodiments, the second negative electrode active material has a particle size distribution index (Dv90 - Dv10)/Dv50 of α₁, and α₁ is 0.6 to 5, and optionally 1 to 4. When the particle size distribution index of the second negative electrode active material is within an appropriate range, the processing performance of the second negative electrode film layer can be improved, so that the overall second negative electrode film layer has a high consistency in particle distribution and a smooth pore structure, the second negative electrode film layer has high active ion transport performance in different areas, and the high-rate charging capability of the secondary battery can be further improved accordingly; and the electrolytic solution can quickly infiltrate the first negative electrode film layer to reduce polarization of the negative electrode and improve the charging and discharging efficiency of the secondary battery.

In some embodiments, the second negative electrode active material has a specific surface area of 3 m²/g to 7 m²/g, and optionally 4 m²/g to 6 m²/g. When the specific surface area of the second negative electrode active material is within an appropriate range, charge exchange impedance can be reduced, and the second negative electrode film layer can have a smoother pore structure and higher active ion transport performance, thereby further improving the high-rate charging capability of the secondary battery. When the specific surface area of the second negative electrode active material is within an appropriate range, the film-forming efficiency of the SEI film can be further improved, the formation of too thick SEI film can be avoided, and the irreversible consumption of active ions can be reduced, thereby further improving the capacity and cycle performance of the secondary battery.

In some embodiments, the second negative electrode active material has a powder compaction density of 0.9 g/cm³ to 1.3 g/cm³ at 20000 N, and optionally 1 g/cm³ to 1.2 g/cm³. When the powder compaction density of the second negative electrode active material is within an appropriate range, the energy density of the secondary battery can be improved.

In some embodiments, the second negative electrode active material includes primary particles, secondary particles, or a combination thereof, and optionally, a quantity proportion of the primary particles in the second negative electrode active material is 90% to 100%. When the second negative electrode active material includes an appropriate proportion of primary particles, the second negative electrode film layer has a shorter active ion transport path, which can further improve the high-rate charging capability of the secondary battery. In addition, polarization of the negative electrode and side reactions of the electrolytic solution can be further reduced, thereby further improving the cycle performance and storage performance of the secondary battery.

In some embodiments, the first negative electrode active material has a volume average particle size Dv50 of d₃ µm, and d₃ is 9 to 18, and optionally 11 to 15. When the particle size of the first negative electrode active material is within an appropriate range, the first negative electrode film layer can have a high compaction density, so that the secondary battery has high initial coulombic efficiency, high energy density, and long cycle life.

In some embodiments, the first negative electrode active material has a particle size distribution index (Dv90 - Dv10)/Dv50 of α₂, and α₂ is 0.2 to 5, and optionally 0.3 to 4. When the particle size distribution index of the first negative electrode active material is within an appropriate range, the processing performance of the first negative electrode film layer can be improved, so that the overall first negative electrode film layer has a high consistency in particle distribution and a smooth pore structure, the first negative electrode film layer has high active ion transport performance in different areas, and the cycle performance of the secondary battery is further improved accordingly.

In some embodiments, the first negative electrode active material has a specific surface area of 0.6 m²/g to 1.5 m²/g, and optionally 0.8 m²/g to 1.4 m²/g. When the specific surface area of the first negative electrode active material is within an appropriate range, charge exchange impedance can be reduced, and the first negative electrode film layer can have a smoother pore structure and higher active ion transport performance, thereby further improving the cycle performance of the secondary battery.

In some embodiments, the first negative electrode active material has a powder compaction density of 1.4 g/cm³ to 1.85 g/cm³ at 20000 N, and optionally 1.6 g/cm³ to 1.75 g/cm³. When the powder compaction density of the first negative electrode active material is within an appropriate range, the energy density of the secondary battery can be improved.

In some embodiments, the first negative electrode active material has a degree of graphitization of 91% to 95%, and optionally 92% to 94%. When the degree of graphitization of the first negative electrode active material is within an appropriate range, the cycle performance of the secondary battery can be improved.

In some embodiments, the first negative electrode active material includes artificial graphite, natural graphite, or a combination thereof. Optionally, a mass percentage of the artificial graphite in the first negative electrode active material is 50% or more, and optionally 60% to 100%, based on the total mass of the first negative electrode active material. Optionally, the artificial graphite surface further has a carbon cladding layer, which can further reduce charge transfer impedance and improve the cycle performance and high-rate charging capability of the secondary battery. Optionally, the carbon cladding layer includes amorphous carbon.

In some embodiments, the first negative electrode active material includes primary particles, secondary particles, or a combination thereof, and optionally, a quantity proportion of the secondary particles in the first negative electrode active material is 90% to 100%. When the first negative electrode active material includes an appropriate proportion of secondary particles, its isotropy increases, and the first negative electrode film layer can have more active ion transport channels, which can further improve the high-rate charging capability of the secondary battery. Meanwhile, the first negative electrode film layer can have a high compaction density to improve the energy density of the secondary battery. In addition, polarization of the negative electrode and side reactions of the electrolytic solution can be further reduced, thereby further improving the cycle performance and storage performance of the secondary battery.

In some embodiments, the negative electrode plate has a compaction density of 1.4 g/cm³ to 1.85 g/cm³, and optionally 1.6 g/cm³ to 1.75 g/cm³. When the compaction density of the negative electrode plate is within an appropriate range, the high-rate charging capability, cycle performance, and energy density of the secondary battery can be improved.

In some embodiments, the negative electrode current collector may be a metal foil or composite current collector. As an example of the metal foil, a copper foil or copper alloy foil may be used. The composite current collector may include a polymer material base layer and a metal material layer formed on at least one surface of the polymer material base layer. As an example, the metal material may include one or more selected from copper, copper alloy, nickel, nickel alloy, titanium, titanium alloy, silver, and silver alloy. The polymer material base layer may include one or more selected from polypropylene (PP), polyethylene terephthalate (PET), polybutylene terephthalate (PBT), polystyrene (PS), and polyethylene (PE).

A preparation method for the negative electrode plate provided in the present application is well-known. In some embodiments, the negative electrode plate may be prepared by the following method: dispersing a first negative electrode active material, a conductive agent, a binder, and any other components in a solvent (such as deionized water) to form a first slurry, and dispersing a second negative electrode active material, a conductive agent, a binder, and any other components in a solvent (such as deionized water) to form a second slurry; coating a negative electrode current collector with the first slurry and drying to form a first negative electrode film layer; and coating the first negative electrode film layer with the second slurry, and obtaining the negative electrode plate after drying, cold pressing, and other procedures.

The negative electrode current collector has two surfaces opposite in its thickness direction, and the first negative electrode film layer and the second negative electrode film layer may be disposed on either or both of the two opposite surfaces of the negative electrode current collector. Optionally, the functional coating may be disposed only on the surface, against the second negative electrode film layer of the negative electrode plate, of the base film, which can reduce the mass of inactive components and increase the energy density of the secondary battery.

It should be noted that the parameters of the first negative electrode film layer and the second negative electrode film layer, provided in the present application, refer to parameter ranges of the coating layer on a single side of the negative electrode current collector. When the first negative electrode film layer and the second negative electrode film layer are disposed on two surfaces of the negative electrode current collector, if the parameters of the coating layer on any surface satisfy the requirements of the present application, it is considered to fall within the protection scope of the present application.

In the negative electrode plate of the present application, Dv90, Dv50, and Dv10 of a material have meanings known in the art, and can be measured by instruments and methods known in the art. For example, they can be conveniently measured by a laser particle size analyzer with reference to the GB/T 19077-2016 entitled "Particle Size Distribution Laser Diffraction Method", such as Mastersizer 2000E type laser particle size analyzer of Malvern Instruments Co., Ltd., UK. Dv90 is a corresponding particle size when a cumulative volume distribution percentage of a material reaches 90%; Dv50 is a corresponding particle size when a cumulative volume distribution percentage of a material reaches 50%; and Dv10 is a corresponding particle size when a cumulative volume distribution percentage of a material reaches 10%.

In the negative electrode plate of the present application, the specific surface area of a material has a meaning known in the art, and can be measured by instruments and methods known in the art. For example, the specific surface area may be tested by a nitrogen adsorption specific surface area analysis test method with reference to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics in the United States.

In the negative electrode plate of the present application, the degree of graphitization of a material has a meaning known in the art, and can be measured by instruments and methods known in the art. For example, the degree of graphitization of the material may be tested by an X-ray diffractometer (such as Bruker D8 Discover) with reference to JIS K 0131-1996 and JB/T 4220-2011 to obtain d₀₀₂, and then calculated according to a formula g = (0.344 - d₀₀₂)/(0.344 - 0.3354)× 100%. In the above formula, d₀₀₂ is an interlayer spacing between (002) crystal planes in the crystal structure of the material, expressed in nanometers (nm).

In the negative electrode plate of the present application, the powder compaction density of a material has a meaning known in the art, and can be measured by instruments and methods known in the art. For example, the powder compaction density can be tested by an electronic pressure tester (such as UTM7305 type) with reference to GB/T24533-2009. An exemplary testing method includes the following steps: weighing 1 g of material, adding the material to a mold with a bottom area of 1.327 cm², increasing pressure to 2000 kg (corresponding to 20000 N), holding the pressure for 30 seconds, then releasing the pressure, holding the pressure for 10 seconds, recording and calculating the powder compaction density of the material under the force of 20000 N.

In the negative electrode plate of the present application, the quantity proportions of primary particles and secondary particles can be measured by instruments and methods known in the art, such as by a scanning electron microscope. To ensure the accuracy of test results, a plurality of (such as 5 or more) different areas may be randomly selected from a test sample for scanning testing, and at a magnification (such as 1000 times or more), percentages of the primary particles and the secondary particles in each area to a total quantity of particles are calculated, to obtain the quantity proportions of the primary particles and the secondary particles in the area. To ensure the accuracy of test results, a plurality of (such as 10 or more) may be selected to repeat the above test, and an average value of the test samples is selected as a final test result. The test may be performed by referring to JY/T010-1996.

In the negative electrode plate of the present application, the thicknesses of the first negative electrode film layer and the second negative electrode film layer have meanings known in the art, and can be measured by instruments and methods known in the art, for example, tested by a scanning electron microscope (such as ZEISS Sigma 300), which can determine a boundary zone between the second negative electrode film layer and the first negative electrode film layer more accurately. An exemplary testing method includes the following steps: cutting a negative electrode plate into a sample to be tested with a size (such as 2 cm × 2 cm), and fixing the negative electrode plate to a sample stage through paraffin; locking and fixing the sample stage onto a sample rack, turning on a power supply of an argon ion cross-section polishing instrument (such as IB-19500CP), extracting vacuum (such as 10⁻⁴ Pa), setting an argon flow rate (such as 0.15 MPa), voltage (such as 8 KV), and polishing time (such as 2 hours), and adjusting the sample stage to a swing mode to start polishing. The test basis may be performed by referring to JY/T010-1996. To ensure the accuracy of test results, a plurality of (such as 5 or more) different areas may be randomly selected from a sample to be tested for scanning testing, and respective thicknesses of the first negative electrode film layer and the second negative electrode film layer in scale test areas are read at a magnification (such as 500 times or more). For the accuracy of testing, a plurality of test areas may be selected for testing and an average value may be used.

In the negative electrode plate of the present application, the compaction density of the negative electrode plate has a meaning known in the art, and can be measured by instruments and methods known in the art. The compaction density of the negative electrode plate = an areal density of the negative electrode plate/ the thickness of the coating layer on a single side of the negative electrode current collector. The areal density of the negative electrode plate has a meaning known in the art, and can be measured by instruments and methods known in the art. An exemplary testing method is as follows: cutting a single-sided coated and cold-pressed negative electrode plate (for a double-sided coated negative electrode plate, a coating layer on one side can be wiped off first) into a small round plate with an area of Si, weighing, and recording as M₁; and then wiping off the coating layer of the weighed negative electrode plate, weighing the negative electrode current collector, and recording as M₀, where the areal density of the negative electrode plate is (M₁ - M₀)/S₁.

It should be noted that various parameters of the first negative electrode active material and the second negative electrode active material may be tested by sampling before coating, or tested by sampling from a cold-pressed negative electrode plate, battery assembly, or secondary battery. When a test sample is obtained from a cold-pressed negative electrode plate, battery assembly, or secondary battery, as an example, the following steps may be performed: (1) randomly selecting a cold-pressed coating layer on one side of the negative electrode current collector, and sampling the second negative electrode active material (for example, scraping powder with a blade for sampling), where the scraping depth does not exceed the boundary zone between the second negative electrode film layer and the first negative electrode film layer; (2) sampling the first negative electrode active material (for example, scraping powder with a blade for sampling), where there may be an inter-melt layer at the boundary zone between the second negative electrode film layer and the first negative electrode film layer in the cold pressing process, so for the accuracy of testing, when the first negative electrode active material is sampled, the inter-melt layer may be scraped off first, and then the first negative electrode active material is scraped for sampling; and (3) placing the first and second negative electrode active materials collected above in deionized water respectively, then filtering and drying, and sintering the dried powder at a temperature for some time (such as 400°C, 2 h) to remove the binder, conductive agent, and the like, thus obtaining the test sample.

### [Positive electrode plate]

In some embodiments, the positive electrode plate includes a positive electrode current collector and a positive electrode film layer disposed on at least one surface of the positive electrode current collector. For example, the positive electrode current collector has two surfaces opposite in its thickness direction, and the positive electrode film layer is disposed on either or both of the two opposite surfaces of the positive electrode current collector.

The positive electrode film layer includes a positive electrode active material, which may be a positive electrode active material commonly known in the art for secondary batteries. For example, the positive electrode active material may include one or more selected from a lithium transition metal oxide, a lithium-containing phosphate, and modified compounds thereof. Examples of the lithium transition metal oxide may include one or more selected from a lithium cobalt oxide (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂, LiNi_{0.5}Co_{0.2}Mn_{0.3}O₂, LiNi_{0.5}Co_{0.25}Mn_{0.25}O₂, LiNi_{0.6}Co_{0.2}Mn_{0.2}O₂, and LiNi_{0.8}Co_{0.1}Mn_{0.1}O₂), a lithium nickel cobalt aluminum oxide (such as LiNi_{0.85}Co_{0.15}Al_{0.05}O₂), and modified compounds thereof. Examples of the lithium-containing phosphate may include one or more selected from lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and modified compounds thereof.

In some embodiments, in order to further increase the energy density of the secondary battery, the positive electrode active material may include one or more of a lithium transition metal oxide shown in a formula 1 and modified compounds thereof.

LiₐNi_{b}Co_{c}M_{d}OₑA_{f} formula 1

In formula 1, 0.8 ≤ a ≤ 1.2, 0.5 ≤ b < 1,0 < c < 1, 0 < d < 1, 1 ≤ e ≤ 2, and 0 ≤ f ≤ 1; M may include one or more selected from Mn, Al, Zr, Zn, Cu, Cr, Mg, Fe, V, Ti, and B; and A may include one or more selected from N, F, S, and Cl.

In the present application, the modified compounds of the foregoing positive electrode active materials may undergo doping modification and/or surface coating modification of the positive electrode active materials.

In some embodiments, the positive electrode film layer may further include a conductive agent to collect micro-current in the positive electrode active material, so as to reduce contact resistance of electrodes, accelerate migration of electrons, reduce polarization, and improve charging and discharging efficiency of the secondary battery. As an example, the conductive agent may include one or more selected from superconducting carbon, conductive graphite, acetylene black, carbon black, Ketjen black, carbon dots, carbon nanotubes, graphene, and carbon nanofibers. In some embodiments, based on a total mass of the positive electrode film layer, the conductive agent has a mass percentage of 5% or less.

In some embodiments, the positive electrode film layer may further include a binder to bond the positive electrode active material and bond the positive electrode film layer with the positive electrode current collector. As an example, the binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film layer, the binder has a mass percentage of 5% or less.

In some embodiments, the positive electrode current collector may be a metal foil or composite current collector. As an example of the metal foil, an aluminum foil or aluminum alloy foil may be used. The composite current collector may include a polymer material base layer and a metal material layer formed on at least one surface of the polymer material base layer. As an example, the metal material may include one or more selected from aluminum, aluminum alloy, nickel, nickel alloy, titanium, titanium alloy, silver, and silver alloy. The polymer material base layer may include one or more selected from polypropylene (PP), polyethylene terephthalate (PET), polybutylene terephthalate (PBT), polystyrene (PS), and polyethylene (PE).

The positive electrode film layer is usually formed by coating a positive electrode current collector with a positive electrode slurry, drying, and cold pressing. The positive electrode slurry is usually formed by dispersing a positive electrode active material, a conductive agent, a binder, and any other components in a solvent and stirring evenly. The solvent may be N-methylpyrrolidone (NMP), but is not limited thereto.

An electrode assembly 6 of the present application is explained below with reference to the accompanying drawings.

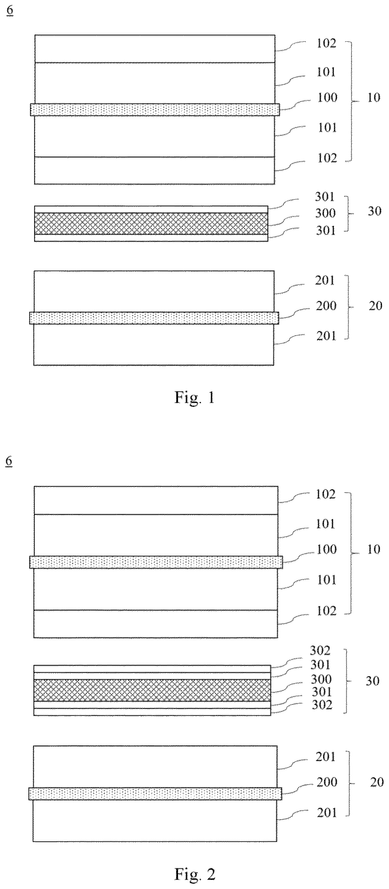

Fig. 1 is a schematic diagram of an embodiment of an electrode assembly 6 of the present application. As shown in Fig. 1, the electrode assembly 6 includes a negative electrode plate 10, a positive electrode plate 20, and a separator 30 located between the negative electrode plate 10 and the positive electrode plate 20. The negative electrode plate 10 includes a negative electrode current collector 100, and a first negative electrode film layer 101 and a second negative electrode film layer 102 located on two sides of the negative electrode current collector 100, where the first negative electrode film layer 101 is located between the negative electrode current collector 100 and the second negative electrode film layer 102. The separator 30 includes a base film 300 and functional coatings 301 located on two sides of the base film 300. The positive electrode plate 20 includes a positive electrode current collector 200 and positive electrode film layers 201 located on two sides of the positive electrode current collector 200.

Fig. 2 is a schematic diagram of another embodiment of an electrode assembly 6 of the present application. As shown in Fig. 2, the electrode assembly 6 includes a negative electrode plate 10, a positive electrode plate 20, and a separator 30 located between the negative electrode plate 10 and the positive electrode plate 20. The negative electrode plate 10 includes a negative electrode current collector 100, and a first negative electrode film layer 101 and a second negative electrode film layer 102 located on two sides of the negative electrode current collector 100, where the first negative electrode film layer 101 is located between the negative electrode current collector 100 and the second negative electrode film layer 102. The separator 30 includes a base film 300, and functional coatings 301 and bonding layers 302 located on two sides of the base film 300. The positive electrode plate 20 includes a positive electrode current collector 200 and positive electrode film layers 201 located on two sides of the positive electrode current collector 200.

As shown in Fig. 1 and Fig. 2, the first negative electrode film layer 101 and the second negative electrode film layer 102 are disposed on two surfaces of the negative electrode current collector 100. Of course, in some embodiments, the first negative electrode film layer 101 and the second negative electrode film layer 102 may be disposed on only one surface of the negative electrode current collector 100. The positive electrode film layers 201 are disposed on two surfaces of the positive electrode current collector 200. Of course, in some embodiments, the positive electrode film layer 201 may be disposed on only one surface of the positive electrode current collector 200. The functional coating layers 301 are disposed on two surfaces of the base film 300. Of course, in some embodiments, the functional coating 301 may be disposed on only one surface, against the second negative electrode film layer 102 of the negative electrode plate 10, of the base film 300.

### Secondary battery

An embodiment of the present application further provides a secondary battery. The secondary battery, also known as a rechargeable battery or a storage battery, refers to a battery that can activate an active material by means of charging after discharge and continue to be used. The secondary battery of the present application includes the electrode assembly of the present application and an electrolytic solution. The secondary battery of the present application may be a lithium-containing secondary battery, especially a lithium-ion secondary battery.

The electrolytic solution includes a lithium salt and a solvent. As an example, the lithium salt may include one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP). As an example, the organic solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethyl sulfonyl ethane (ESE).

In some embodiments, the electrolytic solution may further include additives, such as a negative electrode film-forming additive and a positive electrode film-forming additive, and additives that can improve some performance of the battery, such as an additive that improves overcharging performance of the battery and an additive that improves high- or low-temperature performance of the battery.

In some embodiments, the secondary battery may include an outer package. The outer package may be used for packaging the electrode assembly of the present application and the electrolytic solution.

In some embodiments, the outer package of the secondary battery may be a hard shell, such as a hard plastic shell, an aluminum shell, or a steel shell. The outer package of the secondary battery may alternatively be a soft bag, such as a pocket type soft bag. A material of the soft bag may be plastic, such as one of or a combination of polypropylene (PP), polybutylene terephthalate (PBT), and polybutylene succinate (PBS).

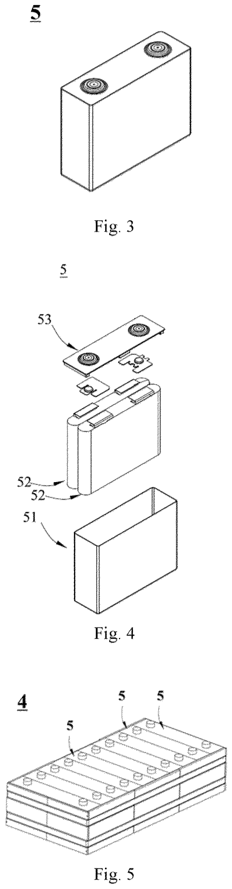

The present application does not have particular limitation to the shape of the secondary battery. The secondary battery may be cylindrical, square, or in other arbitrary shape. Fig. 3 shows a secondary battery 5 with a square structure as an example.

In some embodiments, as shown in Fig. 4, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 is closed to the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding process and/or a laminating process, the electrode assembly is placed in an outer package and dried, then the electrolytic solution is injected, and the secondary battery is obtained after vacuum packaging, standing, formation, shaping, and other procedures.

In some embodiments of the present application, the secondary battery according to the present application may be assembled into a battery module. The battery module may include a plurality of secondary batteries, and a specific quantity may be adjusted according to the application and capacity of the battery module.

Fig. 5 is a schematic diagram of a battery module 4 as an example. As shown in Fig. 5, in the battery module 4, a plurality of secondary batteries 5 may be arranged in sequence along a length of the battery module 4. Of course, the secondary batteries may alternatively be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and a quantity of the battery module included in the battery pack may be adjusted according to the application and capacity of the battery pack.

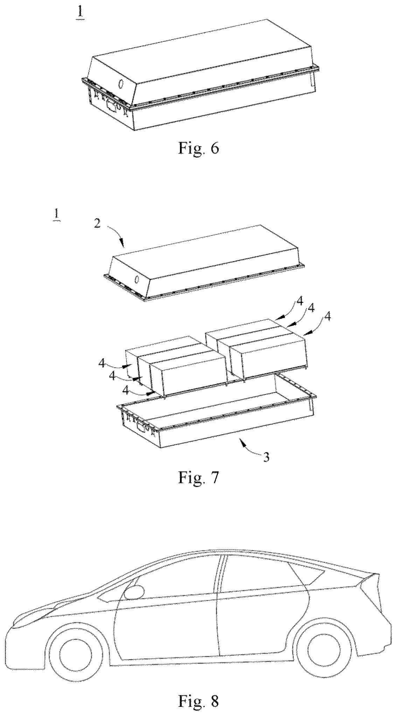

Fig. 6 and Fig. 7 are schematic diagrams of a battery pack 1 as an example. As shown in Fig. 6 and Fig. 7, the battery pack 1 may include a battery box and a plurality of battery modules 4 disposed in the battery box. The battery box includes an upper box body 2 and a lower box body 3. The upper box body 2 is closed to the lower box body 3 to form a closed space for accommodating the battery modules 4. The plurality of battery modules 4 may be arranged in the battery box in any manner.

### Electrical device

An embodiment of the present application further provides an electrical device, which includes at least one of the secondary battery, the battery module, and the battery pack of the present application. The secondary battery, the battery module, and the battery pack may be used as a power supply of the electrical device or as an energy storage unit of the electrical device. The electrical device may be, but is not limited to, a mobile device (such as a mobile phone or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

Fig. 8 is a schematic diagram of an electrical device as an example. The electrical device is a full electric vehicle, a hybrid electric vehicle, a plug-in hybrid electric vehicle, or the like. In order to meet the requirements of the electrical device for high power and high energy density, the battery pack or the battery module may be used.

As another example, the electrical device may be a mobile phone, a tablet computer, a notebook computer, or the like. The electrical device is generally required to be thin and light, so the secondary battery may be used as a power supply.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1-1

### Step (1): Preparation of a negative electrode plate

### S10. Preparation of artificial graphite

Raw non-needle petroleum coke powder was pre-treated to remove impurities and then mixed with coal tar pitch, the mixture was granulated to obtain secondary particles with Dv50 of 10 µm, and then the granulated product was put into an Acheson graphitization furnace and graphitized at 3000°C for 24 h to obtain graphite particles; and the obtained graphite particles were mixed with petroleum asphalt, and the mixture was carbonized at 1000°C for 15 h to obtain artificial graphite. The artificial graphite had Dv50 of 12 µm, Dv90 of 20 µm, Dv10 of 6.5 µm, a degree of graphitization of 92%, a specific surface area of 0.86 m²/g, a powder compaction density of 1.6 g/cm³, and a morphology of secondary particles.

### S20. Preparation of hard carbon

Phenolic resin was heated at 500°C for 30 min to provide a precursor; and the obtained precursor was crushed, thermally treated at 1200°C for 20 h under the protection of nitrogen atmosphere, and then crushed again to give hard carbon. The hard carbon had Dv50 of 5 µm, Dv90 of 10 µm, Dv 10 of 2.5 µm, a specific surface area of 5 m²/g, and a morphology of primary particles.

### S30. Preparation of a first slurry

The artificial graphite prepared above, carbon black as a conductive agent, styrene butadiene rubber (SBR) as a binder, and sodium carboxymethyl cellulose (CMC) as a thickener were mixed in a mass ratio of 96.8: 0.8: 1.2: 1.2, then added to deionized water, and mixed in a vacuum mixer until the system was uniform, to give a first slurry with a solid content of 66%.

### S40. Preparation of a second slurry

The hard carbon prepared above, carbon black as a conductive agent, styrene butadiene rubber (SBR) as a binder, and sodium carboxymethyl cellulose (CMC) as a thickener were mixed in a mass ratio of 95: 1.5: 3.1: 0.4, then added to deionized water, and mixed in the vacuum mixer until the system was uniform, to give a second slurry with a solid content of 66%.

### S50. Coating of the slurries

A surface of a copper foil as a negative electrode current collector with a thickness of 8 µm was coated with the first slurry, which was dried to form a first negative electrode film layer; the first negative electrode film layer was coated with the second slurry, which was dried to form a second negative electrode film layer; and the above steps were repeated on the other surface of the copper foil, followed by cold pressing and other procedures to form a negative electrode plate. On a single side of the negative electrode current collector, the first negative electrode film layer had a thickness of 59 µm, and the second negative electrode film layer had a thickness of 82 µm. The negative electrode plate had a compaction density of 1.55 g/cm³.

### Step (2): Preparation of a positive electrode plate

A positive electrode active material LiNi_{0.8}Co_{0.1}Mn_{0.1}O₂ (NCM811), conductive carbon black as a conductive agent, and polyvinylidene fluoride (PVDF) as a binder were mixed in a mass ratio of 98: 1: 1, added to a solvent NMP, and mixed in the vacuum mixer until the system was uniform, to give a positive electrode slurry with a solid content of 75%; and two surfaces of an aluminum foil with thickness of 13 µm were coated with the positive electrode slurry uniformly, followed by drying at 90°C and cold pressing to form a positive electrode current collector with a positive electrode film layer thickness of 114 µm on a single side.

### Step (3): Preparation of an electrolytic solution

In an environment with a water content of less than 10 ppm, ethylene carbonate (EC), ethyl methyl carbonate (EMC), and diethyl carbonate (DEC) were mixed in a volume ratio of 1: 1: 1 to form an organic solvent. Then, fully dried LiPF₆ was dissolved in the organic solvent to prepare a 1 mol/L electrolytic solution.

### Step (4): Preparation of a separator

Barium titanate (with a dielectric constant of 3000 or more) with Dv50 of 100 nm, styrene butadiene rubber (SBR) as a binder, and sodium carboxymethyl cellulose (CMC) as a dispersant were mixed in a mass ratio of 85: 10: 5, added to deionized water, and mixed in the vacuum mixer until the system was uniform, to give a slurry with a solid content of 40%; and two surfaces of a porous polyethylene film (with a thickness of 10 µm) were coated with the slurry, and a functional coating with a single-side thickness of 2 µm was formed after drying.

### Step (5): Preparation of a secondary battery

The positive electrode plate, the separator, and the negative electrode plate were stacked in order to ensure that the side, coated with the functional coating, of the separator was against the second functional layer of the negative electrode plate, and then wound to form an electrode assembly; and the electrode assembly was put into an outer package, dried, the electrolytic solution was injected, and a secondary battery was obtained after vacuum packaging, standing, formation, shaping, and other procedures.

### Examples 1-2 to 1-7

Secondary batteries were prepared by a method similar to Example 1-1, except that the coating thickness of the slurry in the preparation of the separator and the thickness of the resulting functional coating were different. Specific parameters are shown in Table 1.

### Comparative Example 1-1

A secondary battery was prepared by a method similar to Example 1-1, except that the separator was a porous polyethylene film.

### Comparative Example 1-2

A secondary battery was prepared by a method similar to Example 1-1, except that the separator was a porous polyethylene film and the coating order of the slurries in the preparation of the negative electrode plate was different.

First, a surface of a copper foil as a negative electrode current collector with a thickness of 8 µm was coated with the second slurry, which was dried to form a first negative electrode film layer; the first negative electrode film layer was coated with the first slurry, which was dried to form a second negative electrode film layer; and the above steps were repeated on the other surface of the copper foil, followed by cold pressing and other procedures to form a negative electrode plate. On a single side of the negative electrode current collector, the first negative electrode film layer had a thickness of 82 µm, and the second negative electrode film layer had a thickness of 59 µm.

### Comparative Example 1-3

A secondary battery was prepared by a method similar to Example 1-1, except that the separator was a porous polyethylene film and the second slurry was not applied in the preparation of the negative electrode plate.

Two surfaces of a copper foil as a negative electrode current collector with a thickness of 8 µm were coated with the first slurry, followed by cold pressing and other procedures to obtain a negative electrode plate. On a single side of the negative electrode current collector, the negative electrode film layer had a thickness of 141 µm.

### Comparative Example 1-4

A secondary battery was prepared by a method similar to Example 1-1, except that the separator was a porous polyethylene film and the first slurry was not applied in the preparation of the negative electrode plate.

Two surfaces of a copper foil as a negative electrode current collector with a thickness of 8 µm were coated with the second slurry, followed by cold pressing and other procedures to form a negative electrode plate. On a single side of the negative electrode current collector, the negative electrode film layer had a thickness of 141 µm.

### Comparative Example 1-5

A secondary battery was prepared by a method similar to Example 1-1, except that the separator was a porous polyethylene film and the preparation process of the negative electrode plate was different.

S10 and S20 were the same as those in Example 1-1.

### S30. Preparation of a slurry

The artificial graphite and hard carbon prepared above, carbon black as a conductive agent, styrene butadiene rubber (SBR) as a binder, and sodium carboxymethyl cellulose (CMC) as a thickener were mixed in a mass ratio of 40: 55: 1.5: 3.1: 0.4, then added to deionized water, and mixed in the vacuum mixer until the system was uniform, to give a slurry with a solid content of 66%.

### S40. Coating of the slurry

Two surfaces of a copper foil as a negative electrode current collector with a thickness of 8 µm were coated with the slurry, followed by cold pressing and other procedures to form a negative electrode plate. On a single side of the negative electrode current collector, the negative electrode film layer had a thickness of 141 µm.

### Comparative Example 1-6

A secondary battery was prepared by a method similar to Example 1-1, except that the separator was a porous polyethylene film and the preparation process of the negative electrode plate was different.

S10 to S30 were the same as those in Example 1-1.

### S40. Preparation of a second slurry

The hard carbon prepared above, barium titanate (with a Dv50 of 100 nm and a dielectric constant of 3000 or more), carbon black as a conductive agent, styrene butadiene rubber (SBR) as a binder, and sodium carboxymethyl cellulose (CMC) as a thickener were mixed in a mass ratio of 93: 1: 1.5: 3.1: 0.4, then added to deionized water, and mixed in the vacuum mixer until the system was uniform, to give a second slurry with a solid content of 66%.

### S50. Coating of the slurries

A surface of a copper foil as a negative electrode current collector with a thickness of 8 µm was coated with the first slurry, which was dried to form a first negative electrode film layer; the first negative electrode film layer was coated with the second slurry, which was dried to form a second negative electrode film layer; and the above steps were repeated on the other surface of the copper foil, followed by cold pressing and other procedures to produce a negative electrode plate. On a single side of the negative electrode current collector, the first negative electrode film layer had a thickness of 59 µm, and the second negative electrode film layer had a thickness of 82 µm.

### Test section

### (1) Test on maximum charging rate

At 25°C, the secondary battery prepared above was fully discharged at a rate of 0.33 C and fully charged at the rate of 0.33 C. Afterwards, the fully charged secondary battery was stood for 5 min and fully discharged at the rate of 0.33 C, and the obtained discharge capacity was an actual capacity of the secondary battery at a rate of 1 C, denoted as C0. The secondary battery was fully charged at a rate of x C0 (representing a gradient charging rate, such as 1 C0, 1.1 C0, 1.2 C0, 1.3 C0, 1.4 C0 ...), stood for 5 min, and then fully discharged at 1 C. After 10 cycles, the secondary battery was fully charged at 1 C. The secondary battery was disassembled to observe lithium precipitation on the surface of the negative electrode plate. If no lithium precipitation occurred on the surface of the negative electrode plate, the charging rate was increased for re-measurement until lithium precipitation occurred on the surface of the negative electrode plate. A maximum charging rate at which no lithium precipitation occurred on the surface of the negative electrode plate was recorded. The higher the maximum charging rate of the secondary battery, the better the high-rate charging capability.

### (2) Test on energy density

At 25°C, the secondary battery prepared above was fully charged at a rate of 0.33 C and fully discharged at the rate of 0.33 C. After 3 cycles, discharge energy of the secondary battery was recorded. The energy density of the secondary battery = the discharge energy of the secondary battery/ the mass of the secondary battery. In the examples and comparative examples of the present application, the energy density of the secondary battery prepared in Comparative Example 1-1 was recorded as 100%, while the energy density of the secondary battery in other examples or comparative examples was recorded as a percentage in relative to Comparative Example 1-1.

### (3) Test on cycle life

At 25°C, the secondary battery prepared above was fully discharged at a rate of 1 C and fully charged at the rate of 1 C. Afterwards, the fully charged secondary battery was stood for 5 min and fully discharged at the rate of 1 C, and the obtained discharge capacity C0 was used as an initial capacity of the secondary battery. The secondary battery was fully charged at a rate of 3 C and fully discharged at the rate of 1 C. The charging and discharging test was cycled, and the discharge capacity after each cycle was recorded until the discharge capacity of the secondary battery decayed to 80% of the initial capacity. The number of cycles at this time was used to represent the cycle life of the secondary battery. The higher the number of cycles of the secondary battery, the longer the expected cycle life.

**Table 1**

| Number | Thickness H₁ of functional coating (µm) | Thickness H₂ of second negative electrode film layer (µm) | Thickness H₃ of first negative electrode film layer (µm) | H₁/(H₂+H₃) | Maximum charging rate | Number of cycles | Energy density |
|---|---|---|---|---|---|---|---|
| Example 1-1 | 2 | 82 | 59 | 0.014 | 5.2 C0 | 2100 | 99.3% |
| Example 1-2 | 4 | 82 | 59 | 0.028 | 5.5 C0 | 2360 | 98.1% |
| Example 1-3 | 6 | 82 | 59 | 0.043 | 6.0 C0 | 2420 | 97.0% |
| Example 1-4 | 8 | 82 | 59 | 0.057 | 6.1 C0 | 2465 | 96.0% |
| Example 1-5 | 10 | 82 | 59 | 0.071 | 6.2 C0 | 2500 | 95.0% |
| Example 1-6 | 1 | 82 | 59 | 0.007 | 5.1 C0 | 1780 | 99.6% |
| Example 1-7 | 12 | 82 | 59 | 0.085 | 6.2 C0 | 2545 | 93.5% |
| Comparative Example 1-1 | 0 | 82 | 59 | 0 | 5.0 C0 | 1500 | 100.0% |
| Comparative Example 1-2 | 0 | 59 | 82 | 0 | 3.9 C0 | 1450 | 99.8% |
| Comparative Example 1-3 | 0 | 0 | 141 | 0 | 3.0 C0 | 2500 | 102.0% |
| Comparative Example 1-4 | 0 | 0 | 141 | 0 | 5.1 C0 | 1400 | 99.0% |
| Comparative Example 1-5 | 0 | 0 | 141 | 0 | 4.0 C0 | 1600 | 100.0% |
| Comparative Example 1-6 | 0 | 82 | 59 | 0 | 5.0 C0 | 1650 | 99.2% |

According to the test results of Examples 1-1 to 1-7 and Comparative Examples 1-1 to 1-6, the secondary battery using the electrode assembly of the present application had both high charging rate and long cycle life. The secondary battery prepared without a functional coating on the surface of the separator in Comparative Example 1-1 cannot have both high charging rate and long cycle life. In Comparative Example 1-2, no functional coating was disposed on the surface of the separator, and a hard carbon layer and a graphite layer were sequentially disposed on the surface of the negative electrode current collector, making it difficult for the secondary battery to have both high charging rate and long cycle life. In Comparative Example 1-3, no functional coating was disposed on the surface of the separator and only a graphite layer was disposed on the surface of the negative electrode current collector, so that the secondary battery could have a long cycle life, but could hardly have a high charging rate. In Comparative Example 1-4, no functional coating was disposed on the surface of the separator and only a hard carbon layer was disposed on the surface of the negative electrode current collector, so that the secondary battery could have a high charging rate, but could hardly have a long cycle life. In Comparative Example 1-5, no functional coating was disposed on the surface of the separator and a mixed layer of graphite and hard carbon was disposed on the surface of the negative electrode current collector, making it difficult for the secondary battery to have both high charging rate and long cycle life. Compared to Comparative Example 1-1, the hard carbon layer in Comparative Example 1-6 further included barium titanate, but barium titanate had poor effect of inhibiting continuous growth of lithium dendrites in the direction perpendicular to the electrode plates, making it difficult to significantly improve the charging rate and cycle life of the secondary battery.

According to the test results of Examples 1-1 to 1-7, the increase in the thickness of the functional coating of the separator increased the maximum charging rate and cycle life of the secondary battery. A possible reason is that the intensity of the reverse electric field generated by the functional coating increased to increase the effect of inhibiting continuous growth of lithium dendrites in the direction perpendicular to the electrode plates, thereby improving the high-rate charging capability and cycle performance of the secondary battery.

According to the test results of Examples 1-1 to 1-7, when H₁/(H₂+H₃) was less than 0.01, the thickness of the functional coating of the separator was less than the total thickness of the first negative electrode film layer and the second negative electrode film layer, and its effect of inhibiting continuous growth of lithium dendrites in the direction perpendicular to the electrode plates was not significant, so the improvement on the maximum charging rate of the secondary battery was not significant.

According to the test results of Examples 1-6 and 1-7, when H₁ was greater than 10, the effect of inhibiting, by the functional coating of the separator, continuous growth of lithium dendrites in the direction perpendicular to the electrode plates would not continue to increase; and because the functional coating did not have electrochemical activity and cannot contribute to capacity, when its thickness was greater than 10 µm, the energy density of the secondary battery was significantly decreased.

The inventors then studied the effect of the mass percentage of the ferroelectric material in the functional coating of the separator on the performance of the secondary battery. Secondary batteries in Examples 2-1 to 2-6 were prepared by a method similar to Example 1-2, except that the mass percentage of the ferroelectric material in the functional coating of the separator was different.

**Table 2**

| Number | Content of ferroelectric material W1 | Maximum charging rate | Number of cycles | Energy density |
|---|---|---|---|---|
| Example 2-1 | 70% | 5.1 C0 | 2100 | 98.8% |
| Example 2-2 | 75% | 5.3 C0 | 2250 | 98.5% |
| Example 2-3 | 80% | 5.4 C0 | 2310 | 98.3% |
| Example 2-4 | 90% | 5.6 C0 | 2415 | 98.0% |
| Example 2-5 | 95% | 5.7 C0 | 2460 | 97.8% |
| Example 2-6 | 98% | 6.0 C0 | 1600 | 97.5% |

According to the test results of Examples 1-2 and 2-1 to 2-6, when the thickness of the functional coating of the separator was constant at 4 µm, as the mass percentage of the ferroelectric material in the functional coating increased, both the maximum charging rate and cycle life of the secondary battery increased. A possible reason is that the intensity of the reverse electric field generated by the functional coating increased to increase the effect of inhibiting continuous growth of lithium dendrites in the direction perpendicular to the electrode plates, thereby improving the high-rate charging capability and cycle performance of the secondary battery.

According to the test results of Comparative Example 1-1 and Example 2-1, when the mass percentage of the ferroelectric material in the functional coating of the separator was small, the effect of the obtained functional coating on inhibiting the continuous growth of lithium dendrites in the direction perpendicular to the electrode plates was not significant, so the improvement on the maximum charging rate of the secondary battery was not significant.

According to the test results of Examples 2-5 and 2-6, when the mass percentage of the ferroelectric material in the functional coating of the separator was more than 95%, the cycle performance of the secondary battery was significantly poor. A possible reason is that the content of the binder in the functional coating of the separator was too low, and the functional coating may detach from the surface of the base film in the long-term cyclic charging and discharging processes of the secondary battery.

The inventors next studied the effect of the volume average particle size Dv50 of the ferroelectric material in the functional coating of the separator on the performance of the secondary battery. Secondary batteries in Examples 3-1 to 3-6 were prepared by a method similar to Example 1-2, except that the volume average particle size Dv50 of the ferroelectric material in the functional coating of the separator was different.

**Table 3**

| Number | Dv50 of ferroelectric material | Maximum charging rate | Number of cycles |
|---|---|---|---|
| Example 3-1 | 0.05 µm | 5.8 C0 | 2415 |
| Example 3-2 | 0.3 µm | 5.4 C0 | 2350 |
| Example 3-3 | 0.5 µm | 5.3 C0 | 2330 |
| Example 3-4 | 0.8 µm | 5.2 C0 | 2310 |
| Example 3-5 | 1.0 µm | 5.1 C0 | 2100 |
| Example 3-6 | 1.5 µm | 5.0 C0 | 1750 |

According to the test results of Examples 1-2 and 3-1 to 3-6, when the thickness of the functional coating of the separator was constant at 4 µm and the mass percentage of the ferroelectric material was constant at 85%, as the average particle size Dv50 of the ferroelectric material increased, the maximum charging rate and cycle life of the secondary battery decreased. A possible reason is that, as the average particle size Dv50 of the ferroelectric material increased, the interference of the generated reverse electric field increased, resulting in a poor effect of inhibiting continuous growth of lithium dendrites in the direction perpendicular to the electrode plates. Therefore, the maximum charging rate and cycle life of the secondary battery decreased.

The inventors next studied the effects of the thickness of the first negative electrode film layer and the thickness of the second negative electrode film layer on the performance of the secondary battery. Secondary batteries in Examples 4-1 to 4-7 were prepared by a method similar to Example 1-2, except that the thickness of the first negative electrode film layer and the thickness of the second negative electrode film layer were different.

**Table 4**

| Number | Thickness H₂ of second negative electrode film layer (µm) | Thickness H₃ of first negative electrode film layer (µm) | H₂/H₃ | Maximum charging rate | Number of cycles |
|---|---|---|---|---|---|
| Example 4-1 | 50 | 100 | 0.50 | 5.1 C0 | 2455 |
| Example 4-2 | 70 | 70 | 1.00 | 5.2 C0 | 2415 |
| Example 4-3 | 80 | 60 | 1.33 | 5.5 C0 | 2360 |
| Example 4-4 | 90 | 60 | 1.50 | 5.6 C0 | 2310 |
| Example 4-5 | 120 | 30 | 4.00 | 5.7 C0 | 2045 |
| Example 4-6 | 10 | 90 | 0.11 | 5.0 C0 | 2410 |
| Example 4-7 | 100 | 20 | 5.00 | 6.0 C0 | 1650 |

According to the test results of Examples 4-1 to 4-7, as the thickness of the second negative electrode film increased, the maximum charging rate of the secondary battery increased.

According to the test results of Examples 4-1 to 4-7, when the ratio of the thickness H₂ µm of the second negative electrode film layer to the thickness H₃ µm of the first negative electrode film layer, H₂/H₃, was between 0.25 and 4, the secondary battery could have both a high maximum charging rate and a long cycle life. When H₂/H₃ was less than 0.25, the second negative electrode film layer was relatively thin, and its effect of increasing the maximum charging rate of the secondary battery was not significant. When H₂/H₃ was greater than 4, the second negative electrode film layer was relatively thick, resulting in poor cycle performance of the secondary battery due to the poor cycle performance of hard carbon. According to the test results of Example 4-7 and Comparative Example 1-4, when H₂/H₃ was greater than 4, the improvement on the cycle life of the secondary battery was not significant.

It should be noted that the present application is not limited to the foregoing embodiments. The foregoing embodiments are only examples, and all embodiments having substantially the same composition and achieving the same effects as the technical idea within the scope of the technical solutions of the present application are included in the technical scope of the present application. Moreover, without deviating from the main purpose of the present application, various variations that can be conceived by those skilled in the art and other manner constructed by combining some constituent elements of the embodiments are further included in the scope of the present application.

## Claims

1. An electrode assembly, comprising a negative electrode plate, a positive electrode plate, and a separator located between the negative electrode plate and the positive electrode plate, wherein
the negative electrode plate comprises a negative electrode current collector, and a first negative electrode film layer and a second negative electrode film layer disposed on at least one surface of the negative electrode current collector; the first negative electrode film layer is located between the negative electrode current collector and the second negative electrode film layer and comprises a first negative electrode active material, the first negative electrode active material comprises graphite, the second negative electrode film layer comprises a second negative electrode active material, and the second negative electrode active material comprises hard carbon; and
the separator comprises a base film and a functional coating located at least on a side, against the negative electrode plate, of the base film, and the functional coating comprises a ferroelectric material.

2. The electrode assembly according to claim 1, wherein the functional coating has a thickness of H₁ µm, the second negative electrode film layer has a thickness of H₂ µm, the first negative electrode film layer has a thickness of H₃ µm, and the electrode assembly satisfies that H₁/(H₂+H₃) is 0.01 to 0.15, and optionally 0.01 to 0.08.

3. The electrode assembly according to any one of claims 1 and 2, wherein the thickness of the functional coating is H₁ µm, and H₁ is 2 to 10, and optionally 4 to 6.

4. The electrode assembly according to any one of claims 1-3, wherein the thickness of the second negative electrode film layer is H₂ µm, the thickness of the first negative electrode film layer is H₃ µm, and the negative electrode plate satisfies that H₂/H₃ is 0.10 to 5, and optionally 0.5 to 4.

5. The electrode assembly according to any one of claims 1-4, wherein the ferroelectric material has a volume average particle size Dv50 of d₁ µm, and d₁ is 1 or less, and optionally 0.05 to 0.8.

6. The electrode assembly according to any one of claims 1-5,wherein the second negative electrode active material has a volume average particle size Dv50 of d₂ µm, the first negative electrode active material has a volume average particle size Dv50 of d₃ µm, and d₂/d₃ is 0.1 to 1, and optionally 0.2 to 0.8.

7. The electrode assembly according to any one of claims 1-6, wherein the ferroelectric material in the functional coating has a mass percentage of W1, and based on a total mass of the functional coating, W1 is 70% to 95%, and optionally 80% to 95%.

8. The electrode assembly according to any one of claims 1-7, wherein the functional coating further comprises a binder, and optionally, the binder comprises one or more selected from styrene butadiene rubber, polyacrylic acid, sodium polyacrylate, polyacrylamide, polyvinyl alcohol, sodium alginate, polymethacrylic acid, carboxymethyl chitosan, fluoroacrylate resin, polytetrafluoroethylene, a vinylidene fluoride homopolymer, and a copolymer thereof.

9. The electrode assembly according to any one of claims 1-8, wherein the separator further comprises a bonding layer disposed on a surface of the functional coating, and optionally, the bonding layer comprises one or more selected from homopolymers and copolymers of vinylidene fluoride.

10. The electrode assembly according to any one of claims 1-9, wherein the ferroelectric material has a dielectric constant of 50 or more, and optionally 50 to 100000.

11. The electrode assembly according to any one of claims 1-10, wherein the ferroelectric material comprises one or more selected from inorganic and organic ferroelectric materials;
optionally, the inorganic ferroelectric material comprises one or more selected from a perovskite structured oxide, a tungsten bronze type compound, a bismuth oxide type stratified structured compound, lithium niobate, lithium tantalate, lead metaniobate, and lead barium lithium niobate; and
the organic ferroelectric material comprises one or more selected from a homopolymer or copolymer of vinylidene fluoride, 2,5-dibromo-3,6-dihydroxy-p-benzoquinone, phenazine-chloranilic acid, and croconic acid.

12. The electrode assembly according to any one of claims 1-11, wherein
the hard carbon in the second negative electrode film layer has a mass percentage of W2, and based on a total mass of the second negative electrode film layer, W2 is 68% or more, and optionally 90% to 98%; and/or
the graphite in the first negative electrode film layer has a mass percentage of W3, and based on a total mass of the first negative electrode film layer, W3 is 78% or more, and optionally 90% to 98%.

13. The electrode assembly according to any one of claims 1-12, wherein the second negative electrode active material satisfies at least one of the following conditions (1) to (5):
(1) the second negative electrode active material has a volume average particle size Dv50 of d₂ µm, and d₂ is 3 to 11, and optionally 3 to 7;
(2) the second negative electrode active material has a particle size distribution index (Dv90 - Dv10)/Dv50 of α₁, and α₁ is 0.6 to 5, and optionally 1 to 4;
(3) the second negative electrode active material has a specific surface area of 3 m²/g to 7 m²/g, and optionally 4 m²/g to 6 m²/g;
(4) the second negative electrode active material has a powder compaction density of 0.9 g/cm³ to 1.3 g/cm³ at 20000 N, and optionally 1 g/cm³ to 1.2 g/cm³; and
(5) the second negative electrode active material comprises primary particles, secondary particles, or a combination thereof, and optionally, a quantity proportion of the primary particles in the second negative electrode active material is 90% to 100%.

14. The electrode assembly according to any one of claims 1-13, wherein the first negative electrode active material satisfies at least one of the following conditions (1) to (7):
(1) the first negative electrode active material has a volume average particle size Dv50 of d₃ µm, and d₃ is 9 to 18, and optionally 11 to 15;
(2) the first negative electrode active material has a particle size distribution index (Dv90 - Dv10)/Dv50 of α₂, and α₂ is 0.2 to 5, and optionally 0.3 to 4;
(3) the first negative electrode active material has a specific surface area of 0.6 m²/g to 1.5 m²/g, and optionally 0.8 m²/g to 1.4 m²/g;
(4) the first negative electrode active material has a powder compaction density of 1.4 g/cm³ to 1.85 g/cm³ at 20000 N, and optionally 1.6 g/cm³ to 1.75 g/cm³;
(5) the first negative electrode active material has a degree of graphitization of 91% to 95%, and optionally 92% to 94%;
(6) the first negative electrode active material comprises artificial graphite, natural graphite, or a combination thereof, and optionally, a surface of the artificial graphite has a carbon cladding layer; and
(7) the first negative electrode active material comprises primary particles, secondary particles, or a combination thereof, and optionally, a quantity proportion of the secondary particles in the first negative electrode active material is 90% to 100%.

15. A secondary battery, comprising the electrode assembly according to any one of claims 1-14.

16. A battery module, comprising the secondary battery according to claim 15.

17. A battery pack, comprising one of the secondary battery according to claim 15 and the battery module according to claim 16.

18. An electrical device, comprising at least one of the secondary battery according to claim 15, the battery module according to claim 16, and the battery pack according to claim 17.
